# EUROPEAN PATENT SPECIFICATION

(11) **EP 1 583 280 B1**
(45) Date of publication and mention of the grant of the patent: **13.07.2011**
(21) Application number: 05006865.9
(22) Date of filing: 30.03.2005
(51) Int. Cl.: H04L 12/24

(54) **Network communication device, method of maintenance of network communication device, program, recording medium, and maintenance system**
Netzkommunikationsvorrichtung, Methode der Wartung der Netzkommunikationsvorrichtung, Programm, Speichermittel und Wartungssystem
Dispositif de communication de réseau, méthode d'entretien de dispositif de communication de réseau, programme, milieu d'enregistrement, et système d'entretien

(30) Priority: 30.03.2004 JP 2004101063
(43) Date of publication of application: 05.10.2005
(73) Proprietor: Ricoh Company, Ltd., Tokyo 143-8555 (JP)
(72) Inventor: Kanai, Yoichi, Yokohama-shi Kanagawa (JP)
(74) Representative: Muschke, Markus Artur Heinz

(56) References cited:
- US-A1- 2002 029 298
- US-A1- 2003 188 040
- AGRAWAL N: "On the design of element management system for node Bs in a 3G wireless network" PERSONAL WIRELESS COMMUNICATIONS, 2002 IEEE INTERNATIONAL CONFERENCE ON DEC. 15-17, 2002, PISCATAWAY, NJ, USA,IEEE, 15 December 2002 (2002-12-15), pages 51-55, XP010630750 ISBN: 0-7803-7569-6
- ISEDA K ET AL: "CORBA-based network operation system architecture" NETWORK OPERATIONS AND MANAGEMENT SYMPOSIUM, 1998. NOMS 98., IEEE NEW ORLEANS, LA, USA 15-20 FEB. 1998, NEW YORK, NY, USA,IEEE, US, vol. 2, 15 February 1998 (1998-02-15), pages 639-648, XP010267392 ISBN: 0-7803-4351-4

## Description

### BACKGROUND OF THE INVENTION

### 1. Field of The Invention

The present invention relates to the network communication device, the method of maintenace of the network communication device, the program, the recording medium, and the maintenance system. More particularly, the present invention relates to the network communication device the maintenance of which is remotely performed according to the maintenance policy specified by the user, the method of maintenance of the network communication device, the program, the recording medium, and the maintenance system.

### 2. Description of The Related Art

The network communication device, such as the digital multi-functional peripheral or the electronic document filing system, requires the periodical maintenance operations, such as performing the update of the firmware in the device, or supervising the state of the device to prevent the occurrence of an error in the device after the introduction of the device.

Since performing the maintenance operation of the device at the place of its installation is not efficient, the remote maintenance service is carried out conventionally. In the case of the conventional remote maintenance service, the telephone line is connected to the digital multi-function peripheral for the maintenance, and the maintenance operation for the device is remotely performed through the telephone line.

For example, the remote maintenance system which can remotely perform the suitable maintenance operation even if the serviceman does not go to the installation place of the user's device has been proposed. For example, see Japanese Laid-Open Patent Application No. 2000-132364. The remote maintenance system mentioned above can detect the error of the device in the remote place, can determine the classification of the error of the device concerned, and can perform the suitable maintenance operation according to the classification of the error.

In recent years, with the spreading of the networks, the device for the maintenance is the network communication device which is connected to the network for the communication with the center system. It is desirable that the network communication device is capable of being connected to not only the telephone line but also the network to perform the remote maintenance through the network.

If the maintenance operation of the device for the maintenance can remotely be performed from the network, there is the advantage that the error recovery operation for the device can be performed immediately.

However, when accessing the user's device through the network freely is admitted, there is the possibility that the security of the user information be demaged. Moreover, the degree of the security consciousness and the requested security varies with users. Therefore, it is difficult to set uniformly how the maintenance of the network communication device is carried out.

For this reason, it is desirable that the policy of the maintenance is defined for every user of the network communication device, and how the maintenance is performed through the network according to the maintenance policy concerned is defined. As to how the maintenance of the network communication device capable of performing the remote maintenance is performed, it is desirable to follow the maintenance policy of the user who uses the network communication device.

In addition, there is the proposed remote maintenance system in which the range of maintenance in the device for the maintenance can be set up beforehand, and when the maintenance of the device is remotely performed in response to the request, the range of maintenace is restricted. According to the remote maintenance system, the range of maintenance can be set up by the authenticated user beforehand, and when performing the remote maintenance, the maintenance operation other than the setting can be prevented.

However, in the case of the conventional remote maintenance system mentioned above, the method of describing the range of maintenace is not clearly explained, and the method of setting up the range of maintenace according to the maintenance policy of the user flexibly is not clearly described.

Moreover, in the case of the conventional remote maintenance system mentioned above, only the maintenance form which accesses the device for the maintenance from the remote maintenance center which performs the maintenance at the remote place is described. However, there is no assumption that the maintenance information, such as the number of copy sheets or the toner residual quantity, is transmitted from the device for the maintenance to the remote maintenance center. Thus, in order for the remote maintenance center to acquire the maintenance information, the remote maintenance center must access all the devices for the maintenance which are managed by the remote maintenance center.

In addition, there are many cases in which it is necessary to pass through the fire wall when the remote maintenance center accesses the device for the maintenance, and it is usually difficult to access the device for the maintenance from the external network. Therefore, with the maintenance form in which the device for the maintenance is accessed from the remote maintenance center, there is the problem in that the device for the maintenance cannot be accessed by the remote maintenance center.

Conventionally, there is no technology that enables performing the remote maintenance of the network communication device through the external network according to the policy of the maintenance of the user.

### SUMMARY OF THE INVENTION

An object of the present invention is to provide an improved network communication device in which the above-described problems are eliminated.

Another object of the present invention is to provide a network communication device the maintenance of which can be remotely performed by accessing the network communication device from the external network according to the maintenance policy specified by the user, as well as a method of maintenace of the network communication device, the program, the recording medium, and the maintenance system.

In order to achieve the above-mentioned objects, the present invention provides a network communication device which is connected to a maintenance center through a network, the network communication device comprising: a maintenance policy database in which a maintenance policy is stored, the maintenance policy specifying either transmission of maintenance information related to maintenance of the network communication device or a maintenance operation of the network communication device requested by the maintenance center; a maintenance information transmitting unit transmitting the maintenance information to the maintenance center by referring to the maintenance policy database; a maintenance operation command receiving unit receiving a maintenance operation command requested by the maintenance center; and a maintenance operation control unit performing the maintenance operation command received by the maintenance operation command receiving unit, by referring to the maintenance policy database.

In order to achieve the above-mentioned objects, the present invention provides a method of maintenace of a network communication device which is connected to a maintenance center through a network and equipped with a maintenance policy database wherein the maintenance policy database stores a maintenance policy specifying either transmission of maintenance information related to maintenance of the network communication device or a maintenance operation of the network communication device requested by the maintenance center, the method comprising the steps of: transmitting the maintenance information to the maintenance center by referring to the maintenance policy database; receiving a maintenance operation command requested by the maintenance center; and performing the received maintenance operation command by referring to the maintenance policy database.

In order to achieve the above-mentioned objects, the present invention provides a computer program product embodifed therein for causing a computer to execute a method of maintenace of a network communication device which is connected to a maintenance center through a network and equipped with a maintenance policy database wherein the maintenance policy database stores a maintenance policy specifying either transmission of maintenance information related to maintenance of the network communication device or a maintenance operation of the network communication device requested by the maintenance center, the method comprising the steps of: transmitting the maintenance information to the maintenance center by referring to the maintenance policy database; receiving a maintenance operation command requested by the maintenance center; and performing the received maintenance operation command by referring to the maintenance policy database.

In order to achieve the above-mentioned objects, the present invention provides a computer-readable recording medium embodied therein for causing a computer to execute a method of maintenace of a network communication device which is connected to a maintenance center through a network and equipped with a maintenance policy database wherein the maintenance policy database stores a maintenance policy specifying either transmission of maintenance information related to maintenance of the network communication device or a maintenance operation of the network communication device requested by the maintenance center, the method comprising the steps of: transmitting the maintenance information to the maintenance center by referring to the maintenance policy database; receiving a maintenance operation command requested by the maintenance center; and performing the received maintenance operation command by referring to the maintenance policy database.

In order to achieve the above-mentioned objects, the present invention provides a maintenance system which includes a maintenance center and a network communication device connected to the maintenance center through a network, the maintenance center performing a maintenance operation of the network communication device, the network communication device comprising: a maintenance policy database in which a maintenance policy is stored, the maintenance policy specifying either transmission of maintenance information related to maintenance of the network communication device or a maintenance operation of the network communication device requested by the maintenance center; and a maintenance information transmitting unit transmitting the maintenance information to the maintenance center by referring to the maintenance policy database, the maintenance center comprising: a maintenance information receiving unit receiving the maintenance information from the network communication device; and a maintenance operation command unit transmitting a maintenance operation command to the network communication device based on the received maintenance information, and the network communication device further comprising: a maintenance operation command receiving unit receiving the maintenance operation command from the maintenance center; and a maintenance operation control unit performing the received maintenance operation command by referring to the maintenance policy database.

According to the present invention, it is possible to provide the network communication device the maintenance of which can easily be carried out remotely from the external network according to the policy of the maintenance specified by the user, as well as the method of maintenance of the network communication device, the program, the recording medium, and the maintenance system.

### BRIEF DESCRIPTION OF THE DRAWINGS

Other objects, features and advantages of the present invention will be apparent from the following detailed description when reading in conjunction with the accompanying drawings.
FIG. 1A is a block diagram of the remote maintenance system including the MFP and the remote maintenance center connected through the network, and FIG. 1B is a flowchart for explaining the maintenance operation of the remote maintenance system.
FIG. 2A is a block diagram showing the hardware composition of the remote maintenance center, and FIG. 2B is a block diagram showing the functional composition of the remote maintenance center.
FIG. 3 is a block diagram showing the functional composition of the MFP in which the network communication device of the invention is embodied.
FIG. 4A and FIG. 4B are diagrams showing an example of the maintenance policy.
FIG. 5A amd FIG. 5B are diagrams showing an example of the setting screen of the maintenance policy.
FIG. 6A and FIG. 6B are diagrams showing an example of the setting screen of the maintenance policy.
FIG. 7 is a diagram showing an example of the XML data which is created based on the maintenance policy.
FIG. 8A is a block diagram showing the composition of the remote maintenance system to which the terminal is connected, and FIG. 8B is a diagram showing an example of the setting screen of the maintenance policy on the terminal.
FIG. 9 is a sequence diagram for explaining the sequence of the control procedure when setting the maintenance policy on the MFP.
FIG. 10 is a sequence diagram for explaining the sequence of the control procedure when the result of the administrator's authentication is an error.
FIG. 11 is a sequence diagram for explaining an example of the sequence of the control procedure when the maintenance policy is set up from the remote maintenance center.
FIG. 12 is a sequence diagram for explaining an example of the sequence of the control procedure when the remote maintenance center performs the maintenance operation in the range permitted by the maintenance policy.
FIG. 13 is a diagram showing an example of the SOAP interface when instructing the maintenance operation.
FIG. 14A and FIG. 14B are diagrams showing an example of the SOAP interface in the judgment processing of the maintenance policy.
FIG. 15 is a diagram showing an example of the pseudo code of the SOAP interface when performing the maintenance operation.
FIG. 16 is a sequence diagram for explaining an example of the control procedure when transmitting the periodic maintenance information to the remote maintenance center at the automatic transmit interval.
FIG. 17 is a diagram showing an example of the pseudo code of the SOAP interface when the maintenance processing unit performs the processing which transmits the maintenance information to the remote maintenance center at the automatic transmit interval.
FIG. 18 is a diagram showing an example of the function of the remote maintenance which can be added by the software.

### DETAILED DESCRIPTION OF PREFERRED EMBODIMENTS

A description will now be given of the preferred embodiments of the invention with reference to the accompanying drawings.

In the following, a digital multi-function peripheral (MFP) having the functions of the copier, the fax, the printer and the scanner and having the function of an image forming apparatus to form an image will be explained as the network communication device for the maintenance to which the present invention is applied.

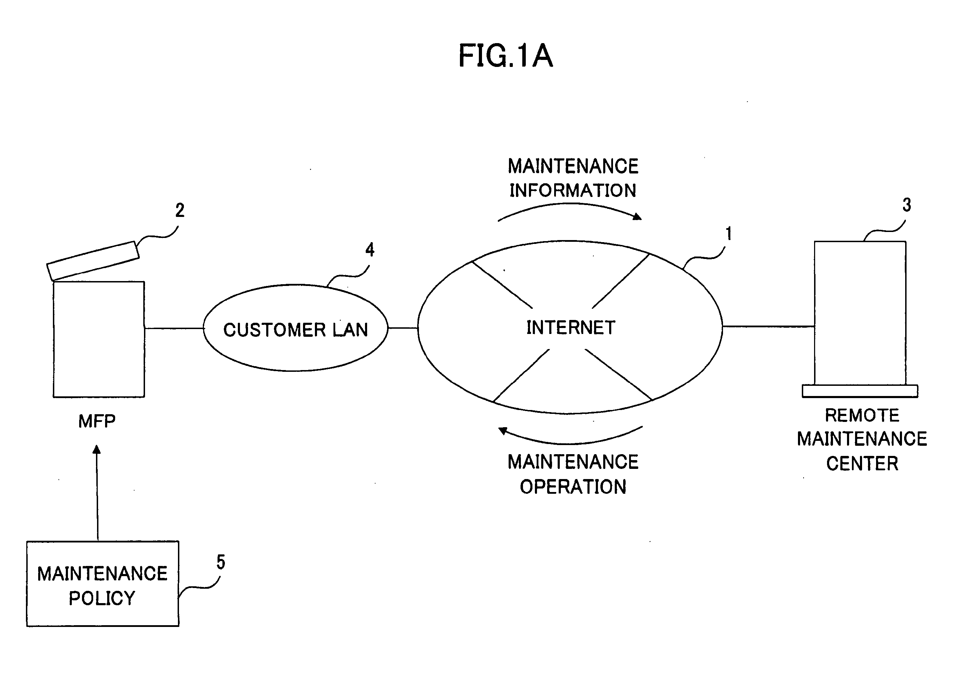

FIG. 1A shows an example of the remote maintenance system which includes the MFP 2 and the remote maintenance center 3 which are connected through the network.

As shown in FIG. 1A, the remote maintenance center 3 is connected with the MFP 2 through the external network 1 (the Internet) and the internal network 4 (customer LAN). The remote maintenance center 3 carries out the remote maintenance of the MFP 2 according to the maintenance policy 5 which is set up on the MFP 2. The external network 1 is mainly the Internet, and the internal network 4 is the LAN (local area network), the WAN (wide area network), etc.

The maintenance operation of the MFP 2 will be explained. In this embodiment, the maintenance operation of the MFP 2 is performed for the MFP 2, which is used by the user, according to the maintenance policy specified by the user. Moreover, the MFP 2 holds the maintenance information which is the information related to the maintenance of the MFP 2. The maintenance information is the information related to the maintenance of the MFP concerned, for example, the toner residual quantity, the number of copy sheets, etc.

The remote maintenance operation in this embodiment is performed according to the maintenance policy 5. The maintenance policy 5 is stored in the MFP 2. A detailed description of the maintenance policy 5 will be given later. The maintenance policy 5 comprises the portion (the maintenance information transmit policy) which specifies how the maintenance information of the maintenance policy 5 is transmitted to the remote maintenance center and at which timing the maintenance information is transmitted thereto, and the portion (maintenance operation permission policy) which specifies what maintenance operation is permitted from the remote maintenance center.

The maintenance information transmit policy specifies the contents of maintenance information, the frequency of transmission, etc. which are supplied to the remote maintenance center 3. For example, the accumulated total number of copy sheets and the toner residual quantity may be transmited as the maintenance information once per 30 minutes, but the log data of fax transmission is not transmitted as the maintenance information.

Moreover, the maintenance operation permission policy specifies the contents of the maintenance operation which the remote maintenance center 3 can perform to the MFP 2. For example, as the maintenance operation permission policy, the resetting of the copy count is permitted, but the device rebooting is not permitted.

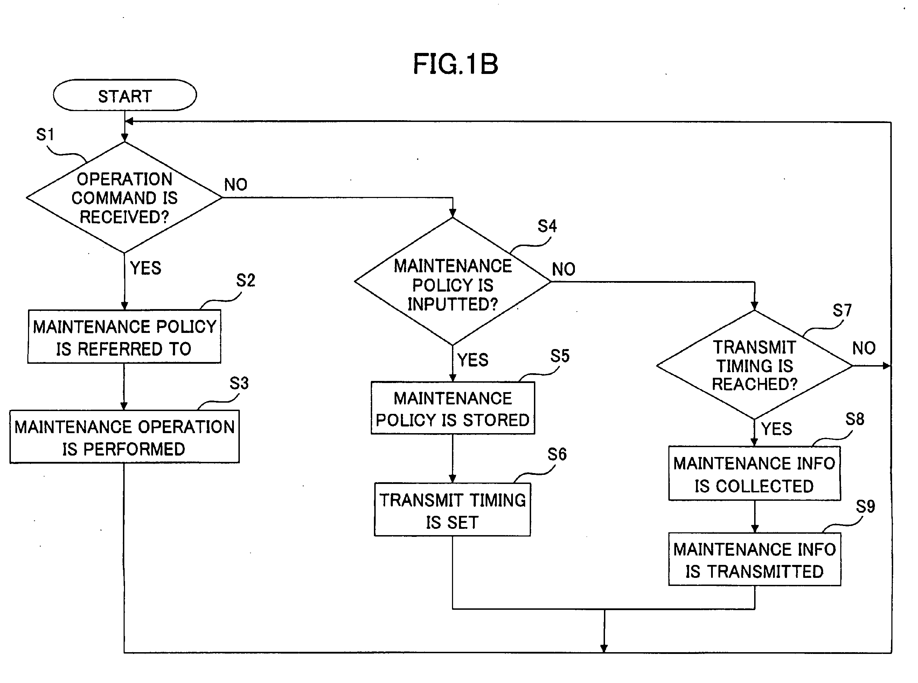

FIG. 1B is the flowchart for explaining the maintenance operation of the MFP 2 in the remote maintenance system of this embodiment.

As shown in FIG. 1B, when the maintenance operation command from the remote maintenance center 3 is received by the MFP 2 (Yes of step S1), the maintenance policy 5 is retrieved to check if the maintenance operation concerned is permitted (step S2). The MFP 2 performs the maintenance operation which is requested by the maintenance center 3 and permitted according to the maintenance policy 5 (step S3).

If the command of acquisition of the maintenance information is received as the maintenance operation command and the maintenance information is not permitted according to the maintenance information transmit policy, such maintenance information is not transmitted to the remote maintenance center 3.

When there is no maintenance operation command from the remote maintenance center 3 (No of step S1), it is determined whether there is the input of a new maintenance policy (step S4).

Only the administrator who is authorized to manage the MFP 2 can set up the maintenance policy 5 on the MFP 2. For example, the administrator is authenticated with the user ID and the password. When it is confirmed that the user is authenticated as being the administrator having the authority to set up the maintenance policy 5, the MFP 2 displays the setting screen in which the user sets up the maintenance policy 5, and makes the user input a new maintenance policy.

The new maintenance policy is stored in the maintenance policy database which stores the maintenance policy (step S5). The MFP 2 extracts the timing at which the maintenance information is transmitted to the remote maintenance center 3, from the stored maintenance policy (step S6).

When there is no input of the new maintenance policy (No of step S4), it is determined whether the time the maintenance information is transmitted to the maintenance center 3 has elapsed (step S7). Each time the timing at which the maintenance information is transmitted to the remote maintenance center 3 is reached (Yes of step S7), the maintenance information is periodically transmitted to the remote maintenance center 3. And, the MFP 2 collects the maintenance information that should be transmitted periodically according to the maintenance policy 5, by referring to the maintenance policy 5 (step S8). Then, the MFP 2 transmits the collected maintenance information to the remote maintenance center 3 (step S9).

In addition, the processing of the judgment of receiving the maintenance operation command (step S1) and the processing of the judgment of the input of the maintenance policy (step S4) may be performed by interruption.

Next, the hardware and functional composition of the remote maintenance center will be explained.

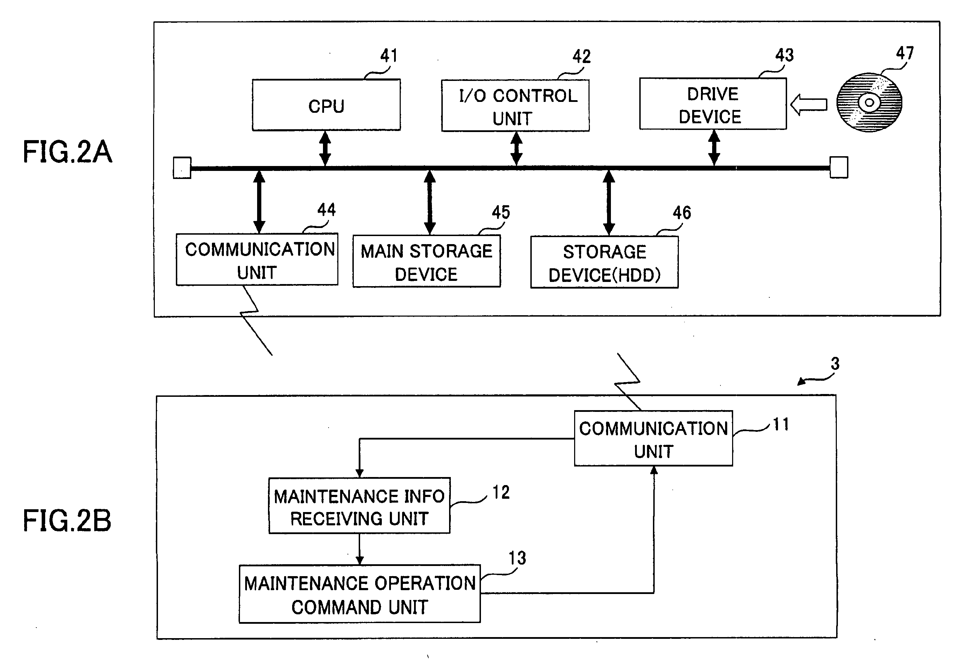

The hardware composition of the remote maintenance center 3 will be explained with reference to FIG. 2A.

As shown in FIG. 2A, the remote maintenance center 3, which is, for example, a computer, comprises the CPU (central processing unit) 41, the I/O (input/output) control unit 42, the drive device 43, the communication unit 44, the main storage device 45, and the storage device 46, which are interconnected by the bus.

The CPU 41 generally controls the processing which is performed by the remote maintenance center 3. The I/O control device 42 controls the I/O of data with the storage device 46 or the drive device 43. The drive device 43 reads the program and data from the recording medium 47, and writes the program and data to the recording medium 47. The recording medium 47 is, for example, a CD-ROM. The communication unit 44 is the interface for connecting the maintenance center 3 with the network 1, and comprises the modem, the router, etc. The main storage device 45 forms the storage region in which the operating system, the program and the data are stored temporarily. The storage device 46 is the storage device in which the program and the data are stored therein. The recording medium 47 is the recording medium in which the programs for supporting the various functions of the remote maintenance center 3 are recorded. The recording medium 47 is set in the drive device 43, and the programs for the functions of the remote maintenance center are installed into the storage device 46 through the drive device 43.

The recording medium 47 in which the programs for the remote maintenance center are recorded may be any of various types of the recording media including semiconductor memories which record information electrically such as a ROM and a flash memory, and optical, electric and magnetic recording media which record information optically, electrically or magnetically such as a CD-ROM, a flexible disk, and a magneto-optic disk (MO).

Next, the functional composition of the remote maintenance center 3 will be explained. FIG. 2B shows the functional composition of the remote maintenance center 3.

As shown in FIG. 2B, the remote maintenance center 3 comprises the communication unit 11, the maintenance information receiving unit 12, and the maintenance operation command unit 13. The communication unit 11 communicates with the MFP 2 through the network 1. The maintenance information receiving unit 12 receives the maintenance information from the MFP 2 through the communication unit 11. The received maintenance information is outputted to the maintenance operation command unit 13.

The maintenance operation command unit 13 transmits a maintenance operation command suitable for the MFP 2 concerned through the communication unit 11, based on the maintenance information sent from the MFP 2.

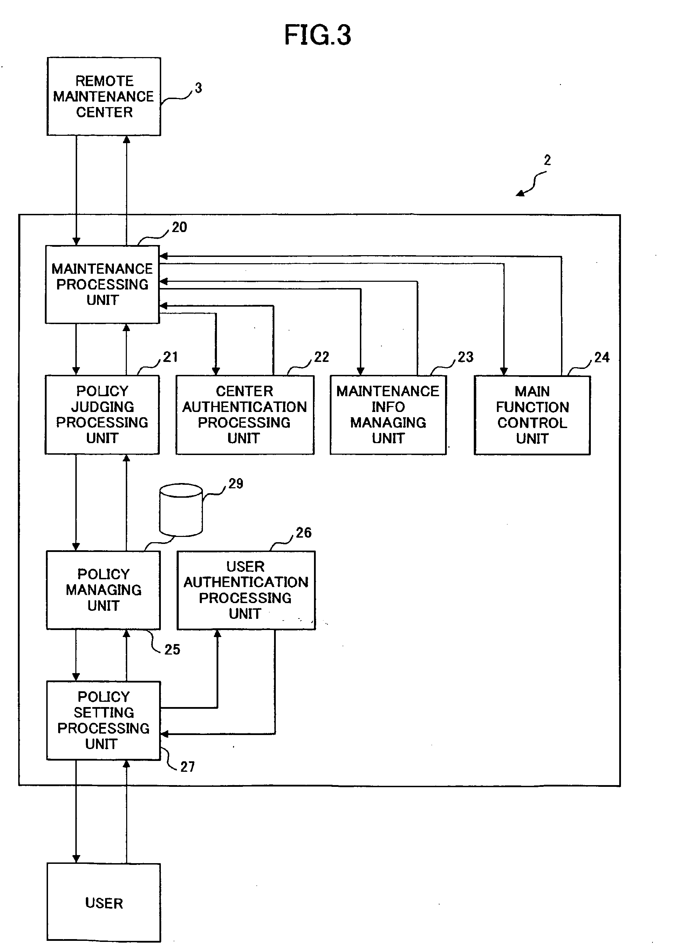

Next, the functional composition of the MFP 2 will be explained with reference to FIG. 3.

As shown in FIG. 3, the MFP 2 comprises the maintenance processing unit 20, the policy judging processing unit 21, the center authentication processing unit 22, the maintenance information managing unit 23, the main function control unit 24, the policy managing unit 25, the user authentication processing unit 26, and the policy setting processing unit 27.

The policy setting processing unit 27 provides the interface of the user and the MFP 2, and outputs the contents concerned to the other function units 25 and 26 according to the contents inputted by the user. The user authentication processing unit 26 authenticates the user based on the user ID and the password which are inputted by the user and received from the policy setting processing unit 27. Therefore, the user authentication processing unit 26 provides the function as the administrator authentication unit.

The policy managing unit 25 calls the current maintenance policy which is currently set up on the MFP 2, and updates the maintenance policy 5 by the new maintenance policy which is set up by the user. The policy managing unit 25 comprises the maintenance policy database 29 in which the maintenance policy 5 is stored. Therefore, the policy managing unit 25 provides the function as the maintenance policy renewal unit.

The maintenance processing unit 20 transmits the maintenance information from the MFP 2 to the remote maintenance center 3 at the timing specified by the maintenance policy 5, and receives the maintenance operation command from the remote maintenance center 3. Even in the case where the maintenance operation command cannot be received from the remote maintenance center 3 by the presence of the fire wall, the maintenance processing unit 20 periodically transmits the inquiry about any maintenance operation command from the remote maintenance center 3, to the remote maintenance center 3, so that the maintenance operation of the MFP 2 can be performed. Therefore, the maintenance processing unit 20 provides the functions of the maintenance information transmitting unit, the maintenance operation command receiving unit, and the operation inquiry unit.

The policy judging processing unit 21 determines whether the maintenance operation command from the remote maintenance center 3 is permitted according to the maintenance policy 5. The center authentication processing unit 22 authenticates the remote maintenance center 3 by using the predetermined authentication method, that is: the center authentication processing unit 22 determines whether the remote maintenance center 3 concerned is a remote maintenance center having the maintenance contract related to the MFP 2. Therefore, the center authentication processing unit 22 provides the function of the maintenance center authentication unit.

Next, the maintenance policy will be explained. The maintenance policy comprises the maintenance information transmit policy and the maintenance operation permission policy as described above. The maintenance information transmit policy is in correspondence with the classification of the maintenance information, and specifies permission/prohibition of transmission of the maintenance information concerned to the remote maintenance center 3, and the timing of the tranmission of the maintenance information concerned.

The maintenance operation permission policy is in correspondence with each maintenance operation, and specifies permission/prohibition of the maintenance operation of the MFP 2 by the remote maintenance center 3.

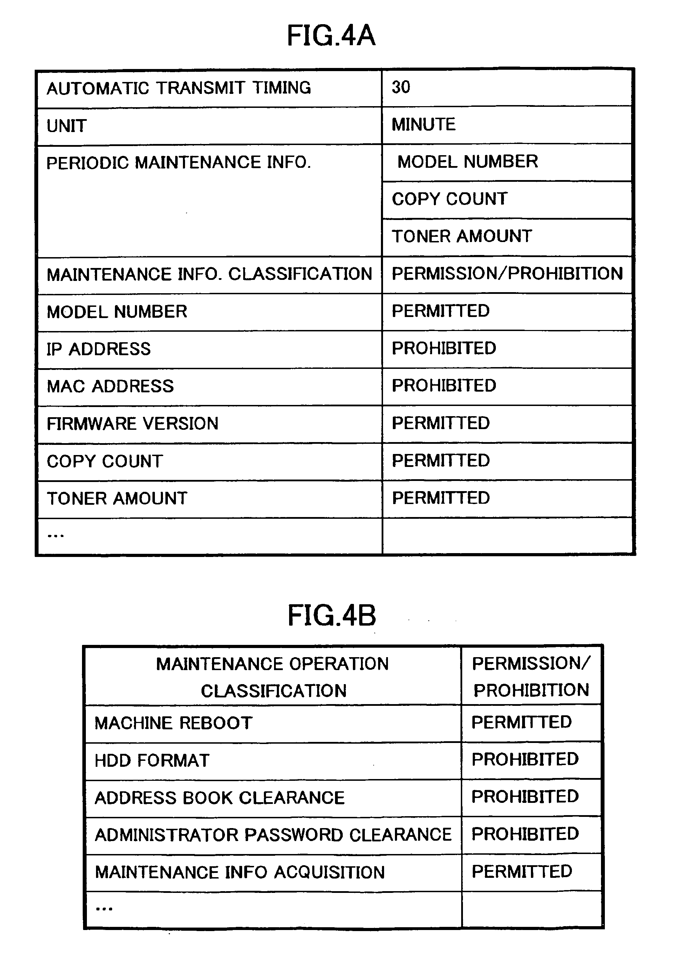

FIG. 4A shows an example of the maintenance information transmit policy, and FIG. 4B shows an example of the maintenance operation permission policy, respectively.

The maintenance information transmit policy contains the items including the automatic transmit interval, the unit, the classification of periodic maintenance information, and the classification of maintenance information.

The automatic transmit interval specifies the timing at which the maintenance information is transmitted automatically. The unit is the unit of the timing set up for the automatic transmit interval, and it is expressed with, for example, hours, minutes and seconds.

The classification of periodic maintenance information is the maintenance information which is transmitted to the remote maintenance center 3 automatically. For example, in FIG. 4A, the model number, the copy count, and the toner residual quantity are set up as the classification of periodic maintenance information. It is not necessary to set the classification of periodic maintenance information.

The classification of maintenance information includes, for example, the model number, the IP address, the MAC (Media Access Control) address, the firmware version, the copy count, the toner residual quantity, etc. The model number is the number which identifies the model of the MFP concerned. The IP (Internet Protocol) address enables the communication to the MFP concerned from the external network, and the MAC (Media Access Control) address identifies the physical address in the LAN. The firmware version indicates the version of the firmware installed in the MFP concerned. The copy count is the number of copy sheets from the last maintenance after the MFP concerned is supplied. The toner residual quantity indicates the quantity of the remaining toner.

Permission/prohibition can be set up for every classification of each maintenance information, and only the maintenance information of the classification for which permission is set up is transmitted to the remote maintenance center 3 under control of the remote maintenance center.

The maintenance operation permission policy contains the maintenance operations including the rebooting of the device, the HDD formatting, the address book clearance, the administrator password clearance, the maintenance information acquisition, etc., and permission/prohibition can be set up for every maintenance operation. It is possible to perform only the maintenance operation for which permission is set up, under control of the remote maintenance center 3.

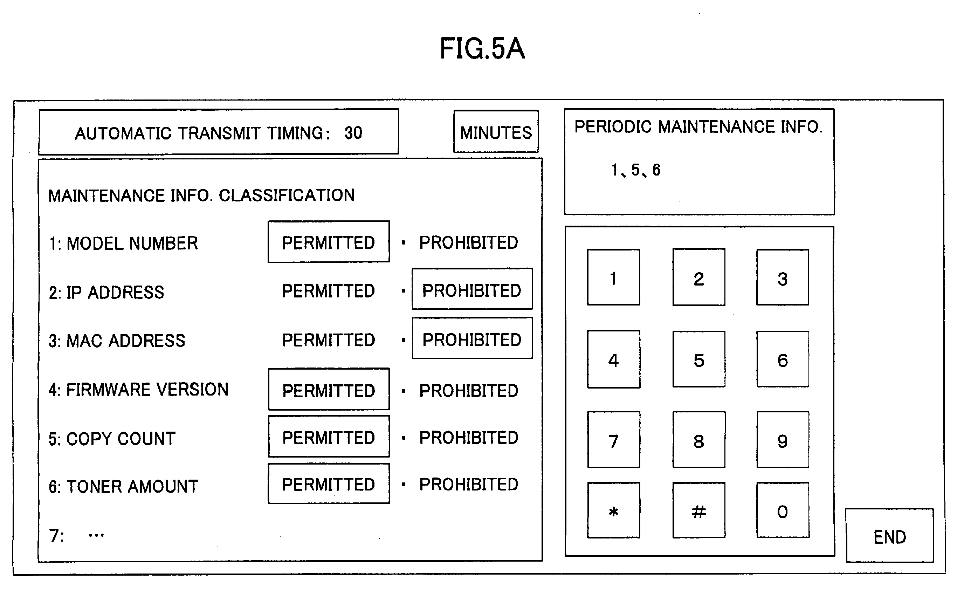

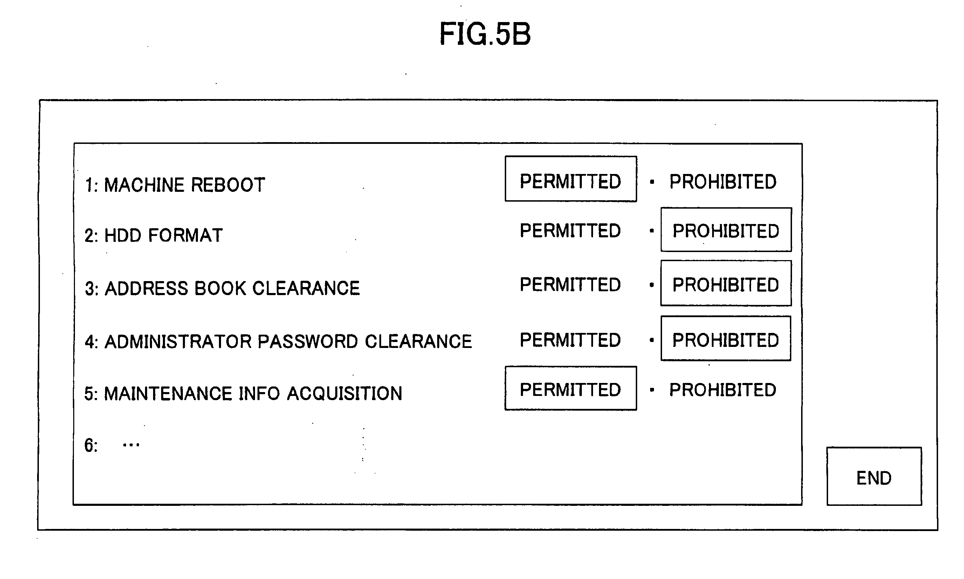

The administrator sets up each item of the maintenance policy 5 from the touch panel of the MFP concerned. FIG. 5A shows an example of the setting screen of the maintenance information policy. FIG. 5B shows an example of the setting screen of the maintenance operation permission policy.

In the setting screens of the maintenance information policy and the maintenance operation permission policy, the numeric value can be inputted by touching the keyboard shown in FIG. 5A. The item of permission/prohibition can be chosen by touching the corresponding key.

For example, if the keys 3 and 0 of the keyboard are touched, the numeraic value of the automatic transmit interval is inputted as 30. The display of the unit of the automatic transmit interval is shifted to the hours, the minutes or the seconds every time the key of the "minutes" is touched.

The classification of the periodic maintenance information is inputted by touching the number of maintenance information classification on the keyboard. Moreover, the display of the selected item of permission/prohibition is surrounded by the rectangle on the screen. The setting up is completed when the administrator touches the end button.

Alternatively, the setting screen may be configured so that the item is not individually set up as in FIG. 5A or FIG. 5B but each item of the maintenance policy can be set up by one operation.

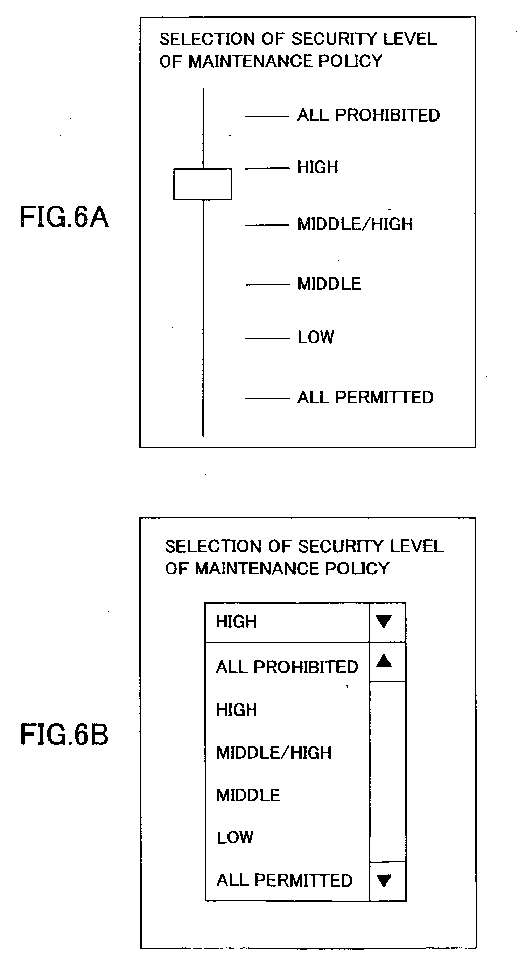

FIG. 6A shows an example of the setting screen of the maintenance policy using the slide button method. FIG. 6B shows an example of the selection screen of the maintenance policy using the pulldown selection method.

In the setting screen of FIG. 6A or FIG. 6B, the security level of the maintenance policy can be selected from among the "all prohibited", the "high", the "middle/high", the "middle", the "low", and the "all permitted". Each security level is matched with the classification of the combination of as any to set each maintenance policy between permission/prohibition and periodic maintenance information and automatic transmit interval are defined beforehand. Therefore, each item of the maintenance policy is automatically set up when the administrator chooses one of these security levels.

In addition, it is possible to allow the administrator to perform matching of each security level with the permission/prohibition of each maintenance policy item.

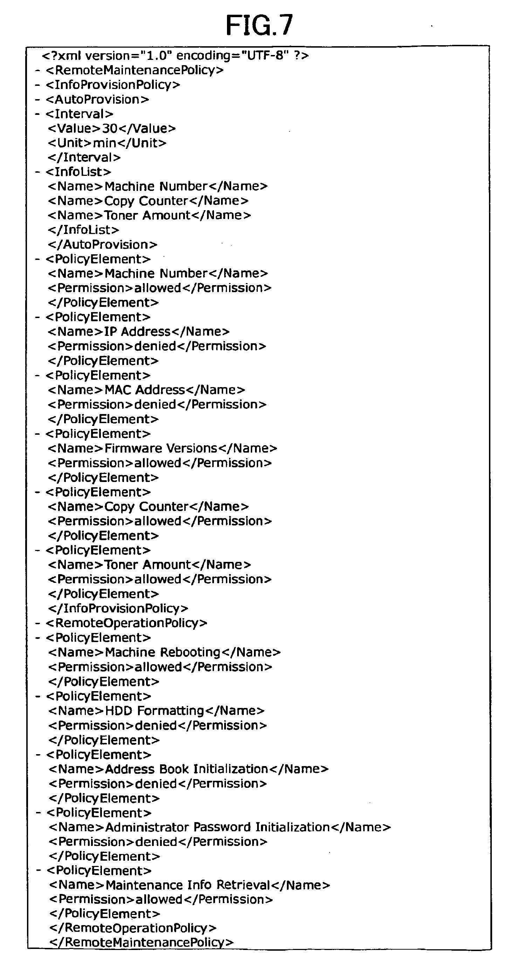

The maintenance policy inputted by the administrator is created as an XML data in the XML (extensible markup language) format. FIG. 7 shows an example of the XML data which is created based on the maintenance policy inputted from the screen of FIG. 5 or FIG. 6.

When the end button is touched, the policy setting processing unit 27 of FIG. 3 creates the XML data as in FIG. 7 from the contents of the setting of the inputted maintenance policy.

The XML data is outputted to the policy managing unit 25, and the policy managing unit 25 stores the XML data in the maintenance policy database 29 by arranging the XML data as the file.

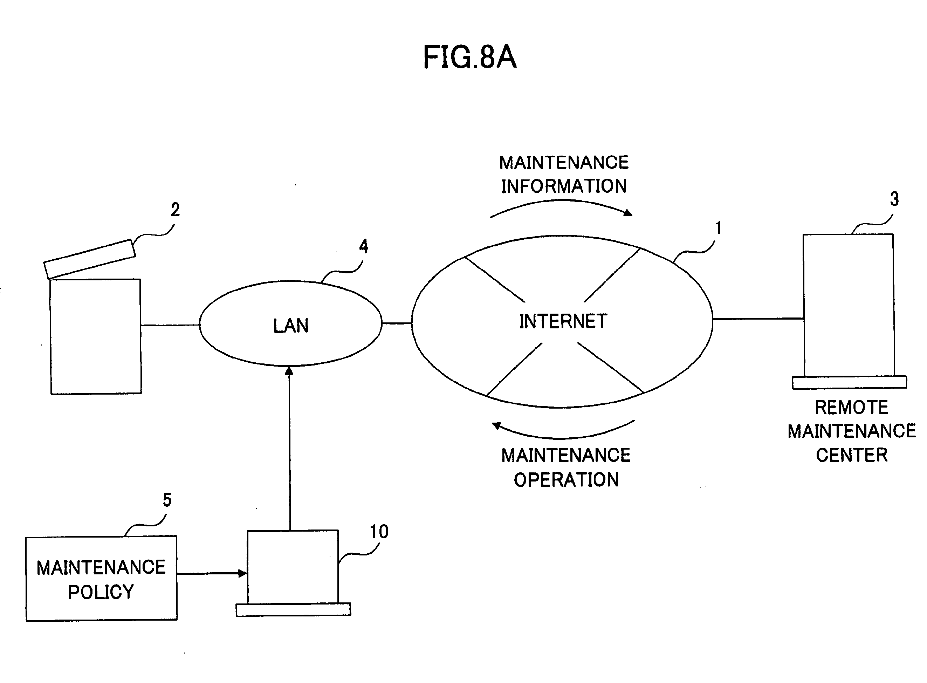

Alternatively, it is possible to input the maintenance policy from the terminal connected to the internal network 4 or the Internet 1, without using the touch panel of the MFP 2. FIG. 8A shows the composition of the remote maintenance system to which the terminal 10 is connected.

In FIG. 8A, the elements which are the same as corresponding elements in FIG. 1 are designated by the same reference numerals, and a description thereof will be omitted.

In the present embodment, the terminal 10 is the computer. When inputting the maintenance policy from the terminal 10, the program for setting up the maintenance policy is started on the terminal 10 and the maintenance policy is inputted.

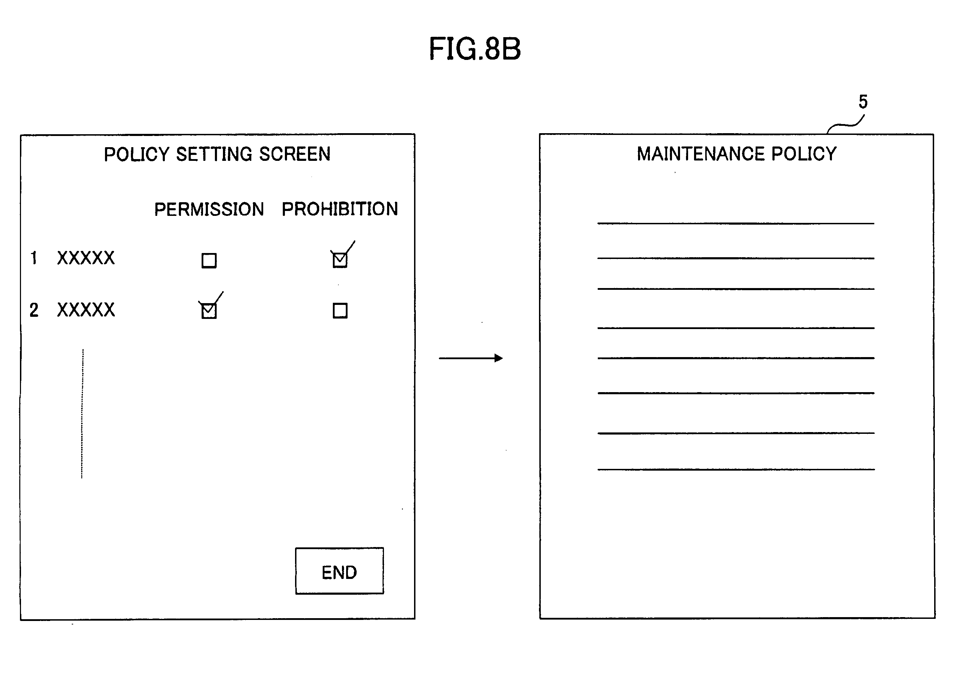

FIG. 8B shows an example of the setting screen for setting up the maintenance policy displayed on the terminal 10. Each item of the maintenance policy is set up by the authenticated administrator. If the setting of the maintenance policy is completed, the maintenance policy is converted into the XML data after the end button is pressed.

The maintenance policy 5 of FIG. 8B is described by using the XML format. The maintenance policy 5 described by the XML format is transmitted to the MFP 2, and the current maintenance policy stored in the maintenance policy database 29 is updated with the new maintenance policy 5.

In addition, it is possible that the maintenance policy 5 be inputted without using the MFP 2 or the terminal 10. For example, the administrator creates the XML data beforehand and set up the same on the MFP 2. The administrator stores in the recording medium like the floppy disk or the smart card by converting the maintenance policy described in the XML format into the file. When the maintenance policy is set up on the MFP 2, each item (permission/prohibition) of the maintenance policy is not inputted, but the floppy disk or the smart card in which the XML data is recorded is set to the MFP 2. The policy setting processing unit 27 of the MFP 2 reads the XML file from the floppy disk or the smart card, and stores the same in the maintenance policy database 29 as the new maintenance policy.

Moreover, when passing the maintenance policy recorded on the floppy disk to another person and setting up the maintenance policy on the MFP 2, the maintenance policy in the floppy disk (XML data) may be altered unjustly. In order to prevent this, it is desirable that the electronic signature of the administrator is given to the XML data. When the policy setting processing unit 27 reads the XML data from the floppy disk or the smart card set to the MFP and sets up the same on the policy managing unit 25 as the maintenance policy, the XML data concerned is assigned to the policy managing unit 25 after the electronic signature given is referred to and the justification of the XML data is checked.

As a method for assigning the electronic signature to the XML file, the electronic signature method in conformity with the XML structure, for example, the XML signature (IETF RFC3275), may be used, the XML file may only be treated as data and the electronic signature method like the PKCS (Public Key Cryptography Standards) #7 may be used.

Based on the above-described composition and functions, the method of maintenance of the MFP 2 by the remote maintenance center 3 will be explained.

The remote maintenance center 3 and the MFP 2 repeat performing two or more communications therebetween. For example, such communications include not only transmitting the maintenance information but also checking if it is the device for the maintenance which has the maintenance contract, detecting whether it is connected with the right remote maintenance center 3, etc.

In order to perform such communications, it is suitable to use the SOAP (Simple Object Access Protocol) on the HTTP. The SOAP uses the message described in the XML format and makes access possible at the object (data) of the computer on the network.

Since the SOAP can access data without being dependent on the OS or the programming language, even if they are various devices for the maintenance and computers, it can perform the machining and processing of data, without being influenced by the difference of architecture.

In the following, the SOAP message is used to perform the maintenance operation of the MFP 2 by the remote maintenance center 3. Since the SOAP message transmitted to the MFP 2 from the remote maintenance center 3 contains two or more SOAP interfaces used by the processing of the MFP 2, the maintenance processing unit 20 distributes the SOAP interface to each of the function units shown in FIG. 3 according to the contents of the processing, and outputs the same to the function unit concerned.

Next, the administrator's authentication which is performed at the time of inputting the maintenance policy will be explained. Since the maintenance policy specifies transmission of the maintenance information and permission/prohibition of the maintenance operation, it is desirable to inhibit any person, other than the administrator who is authorized to manage the maintenance policy of the MFP 2, from updating the maintenance policy of the MFP 2.

The authentication which is performed at the time of inputting the maintenance policy will be explained.

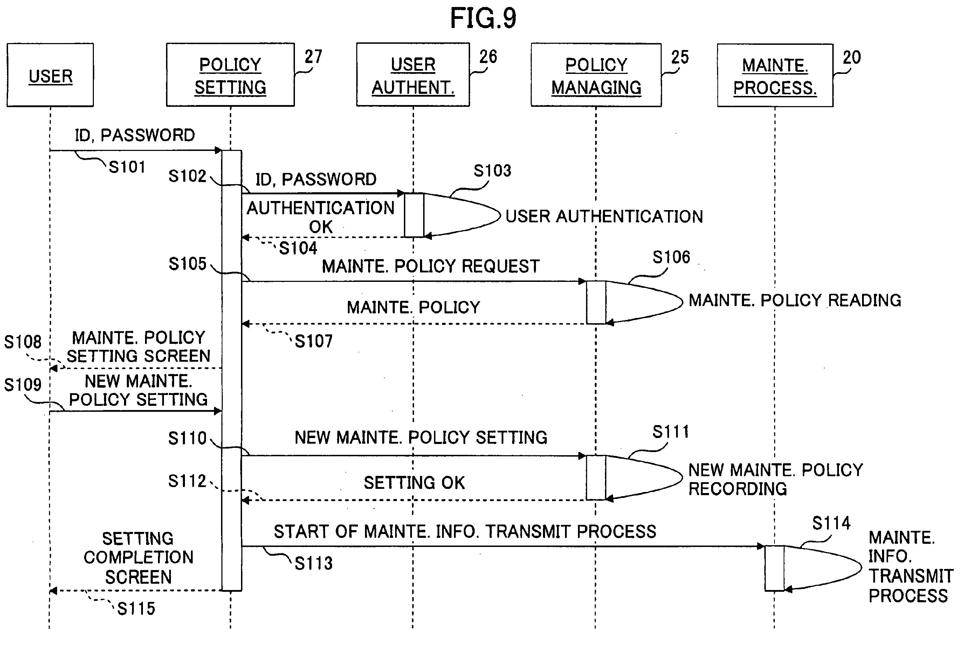

FIG. 9 is the sequence diagram for explaining the sequence of the control procedure when setting the maintenance policy 5 on the MFP 2 by the administrator.

When setting up the maintenance policy, the user inputs the user ID and the password (S101). For example, the SOAP interface "authenticateAdmin(string name and string password): string session" is called, and the password is stored in the "password" and the user ID is stored in the "name".

If the user ID and the password are inputted, the policy setting processing unit 27 outputs the user ID and the password to the user authentication processing unit 26 (S102).

The user authentication processing unit 26 authenticates the user based on the matching of the user ID and the password (S103).

When the match of the user ID and the password occurs, the signal indicating that the user authentication is completed normally is outputted to the policy setting processing unit 27 (S104).

The signal indicating that the user authentication is completed normally is stored in the return value "session".

When the user authentication is completed, the policy setting processing unit 27 requests the current maintenance policy of the policy managing unit 25 (S105). For example, the SOAP interface "getCurrentRemoteMaintenancePolicy(String session): byte[]policy" is called. The policy managing unit 25 reads the current maintenance policy (S106), stores the current maintenance policy in the "policy", and outputs the same to the policy setting processing unit 27 (S107).

The policy setting processing unit 27 displays the current maintenance policy on the maintenance policy setting screen while displaying the maintenance policy setting screen (S108). The user can input the new maintenance policy while making reference to the current maintenance policy displayed on the maintenance policy setting screen.

The new maintenance policy (S109) inputted by the user is outputted to the policy managing unit 25 by the policy setting processing unit 27 (S110). For example, the SOAP interface "setNewRemoteMaintenancePolicy(string session and byte[]policy): string error" is called by the policy setting processing unit 27.

The new maintenance policy stored in the "policy" is outputted to the policy managing unit 25. The policy managing unit 25 updates the current maintenance policy by the new maintenance policy (S111).

Moreover, the policy managing unit 25 stores in the "error" the signal indicating that the renewal of the maintenance policy is completed, and outputs the same to the policy setting processing unit 27 (S112).

Subsequently, the policy setting processing unit 27 displays the indication that the setup of the new maintenance policy is completed on the maintenance policy setting screen (S115).

Moreover, the policy setting processing unit 27 outputs the signal indicating that the new maintenance policy is set up, to the maintenance processing unit 20 (S113).

When the new maintenance policy is set up, the maintenance processing unit 20 starts the processing of transmission of the maintenance information based on the new maintenance policy (S114) since the automatic transmit interval at which the maintenance information is transmitted to the remote maintenance center 3 periodically is changed.

Thus, the maintenance policy is set up on the MFP 2 based on the maintenance policy specified by the user. In addition, the biometrics method using the fingerprint etc., or the PKI (Public Key Infrastructure) based authentication method using the smart card may be used instead as the method of user authentication.

Since the maintenance policy defines the policy of the maintenance of the MFP 2 specified by the authorized administrator, the maintenance policy cannot be set up when the third person other than the administrator intends to set up the maintenance policy or when the remote maintenance center 3 intends to remotely set up the maintenance policy.

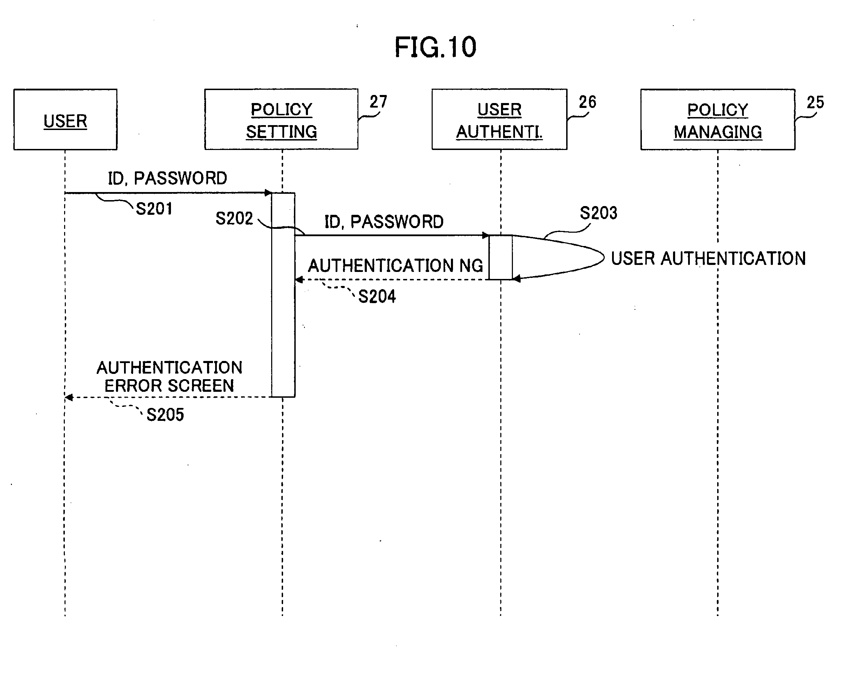

FIG. 10 is the sequence diagram for explaining the sequence of the control procedure when the result of the administrator authentication is an error because the person other than the administrator intends to set up the maintenance policy on the MFP.

As shown in FIG. 10, the user inputs the user ID and the password (S201).

The policy setting processing unit 27 outputs the inputted user ID and password to the user authentication processing unit 26 (S202).

The user authentication processing unit 26 receives the user ID and the password, and authenticates the user based on the matching of the user ID and the password (S203).

When the matching of the user ID and the password does not occur, the signal indicating that the user authentication is completed abnormally is outputted to the policy setting processing unit 27 (S204).

The policy setting processing unit 27 displays the authentication error screen, and finishes the processing (S205).

When the user aauthentication is not completed normally, the maintenance policy setting screen is not displayed.

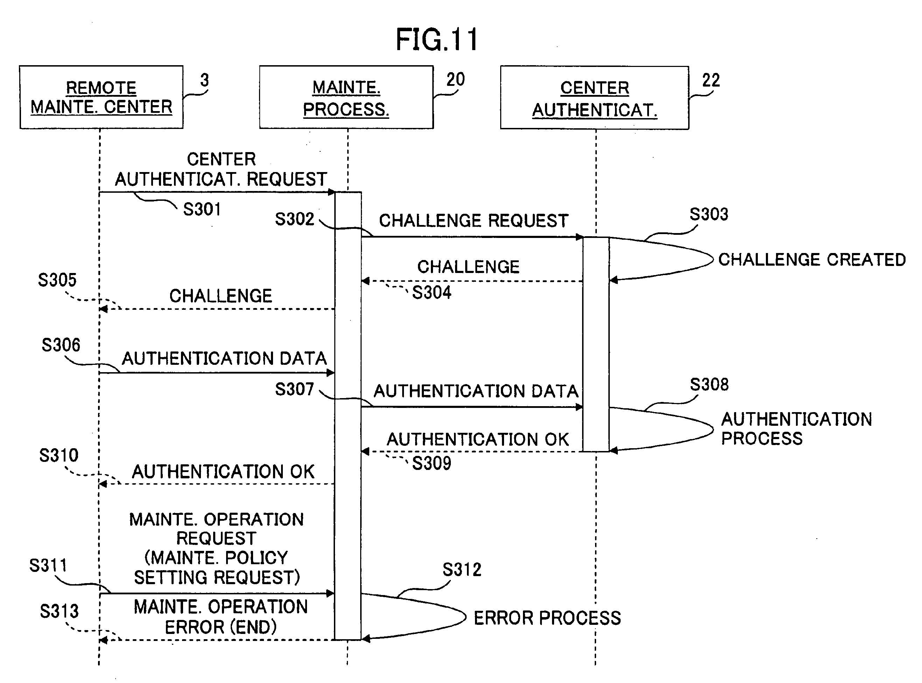

FIG. 11 shows the sequence diagram for explaining the sequence of the control procedure when the maintenance policy is set up from the remote maintenance center 3.

As shown in FIG. 11, the remote maintenance center 3 first sends the authentication request to the MFP 2 (S301). In this embodiment, the challenge/response method is used as the authentication method.

The maintenance processing unit 20 requests the challenge of the center authentication processing unit 22 (S302).

The center authentication processing unit 22 creates the challenge (S303), and outputs the created challenge to the maintenance processing unit 20 (S304).

The maintenance processing unit 20 transmits the challenge to the remote maintenance center 3 (S305). The remote maintenance center 3 receives the challenge, subsequently performs the computation of the challenge concerned by using the secret, and creates the authentication data.

The remote maintenance center 3 transmits the created authentication data to the maintenance processing unit 20 (S306).

The maintenance processing unit 20 outputs the received authentication data to the center authentication processing unit 22 (S307).

The center authentication processing unit 22 authenticates the remote maintenance center 3 by determining whether the result of computation of the challenge concerned using the secret, shared with the remote maintenance center 3, is equal to the authentication data received from the remote maintenance center 3 (step S308).

When the matching of the result of computation and the authentication data received occurs, the center authentication processing unit 22 outputs the signal indicating that the center authentication is completed normally to the maintenance processing unit 20 (S309).

The maintenance processing unit 20 transmits the signal concerned to the remote maintenance center 3 (S310).

The authenticated remote maintenance center 3 requests the setting of the maintenance policy in the maintenance processing unit 20 (S311).

However, since it is beforehand set up so that only the administrator can perform the setting of the maintenance policy, the maintenance processing unit 20 transmits the error signal of maintenance operation to the remote maintenance center 3 (S313). This error signal is sent back in response to the maintenance policy setting command sent from the third party other than the administrator.

The remote maintenance center 3 needs to be authenticated when performing the maintenance operation of the MFP 2. However, even if the center authentication is completed normally, the authority to update the maintenance policy of the MFP 2 is not granted for the remote maintenance center 3.

Since the maintenance policy cannot be set up by the person other than the administrator as shown in the sequence diagrams of FIG. 10 and FIG. 11, the security of the maintenance policy of the MFP 2 can be protected.

In addition, the maintenance policy may be configured to specify permission/prohibition of rewriting of the maintenance policy by the remote maintenance center 3.

When the administrator sets the rewriting of the maintenance policy as "permission" in the maintenance policy, the maintenance policy can be rewritten by the remote maintenance center 3.

When the rewriting of the maintenance policy is set as "prohibition", unless the administrator sets it as "permission", the rewriting of the maintenance policy cannot be performed. Accordingly, by giving the user flexibility, the maintenance of the network communication device can be remotely performed from the external network 1 according to the user's maintenance policy.

Next, the maintenance operation by the remote maintenance center will be explained. Namely, the processing of the maintenenace operation to the MFP 2 performed by the remote maintenance center 3 will be explained.

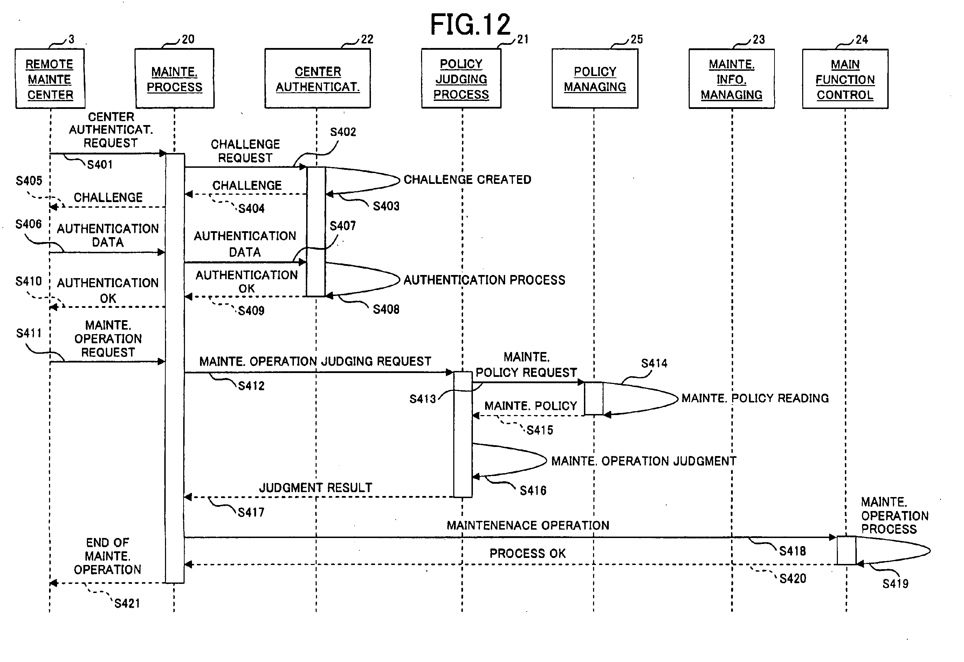

FIG. 12 is the sequence diagram for explaining an example of the sequence of the control procedure when the remote maintenance center 3 performs the maintenance operation of the maintenance information in the range permitted by the maintenance policy.

As shown in FIG. 12, the remote maintenance center 3 first transmits the authentication request to the maintenance processing unit 20 (S401).

The center authentication method in this embodiment uses the challenge/response method similar to the case of the authentication of the administrator. The maintenance processing unit 20 requests the challenge of the center authentication processing unit 22 (S402). When the challenge is requested, the SOAP interface "getChallenge(): byte[]challenge" is called.

The center authentication processing unit 22 receives the request of the challenge, creates the challenge, and stores the created challenge in the return value "challenge" (S403). The center authentication processing unit 22 outputs the same to the maintenance processing unit 20 (S404).

The maintenance processing unit 20 receives the challenge and transmits the challenge to the remote maintenance center 3 (S405).

The remote maintenance center 3 receives the challenge, creates the authentication data by performing computation of the challenge concerned using the secret, and transmits the authentication data to the maintenance processing unit 20 (S406).

Subsequently, the maintenance processing unit 20 outputs the authentication data to the center authentication processing unit 22 (S407).

When the center authentication is requested, the SOAP interface "internalAuthenticate(byte[] authCode): atring session" is called. The authentication data, which is obtained by the remote maintenance center 3 by performing the computation of the challenge using the secret, is stored in the "authCode".

The center authentication processing unit 22 authenticates the remote maintenance center 3 by determining whether the result of computation of the challenge concerned using the secret shared with the remote maintenance center 3 is equal to the authentication data received from the remote maintenance center 3 (S408).

The numeric value according to the authentication result is stored in the return value "session", and the center authentication processing unit 22 outputs the same to the maintenance processing unit 20 (S409).

When the center authentication is completed normally (S410), the remote maintenance center 3 transmits the maintenance operation command to the maintenance processing unit 20 (S411).

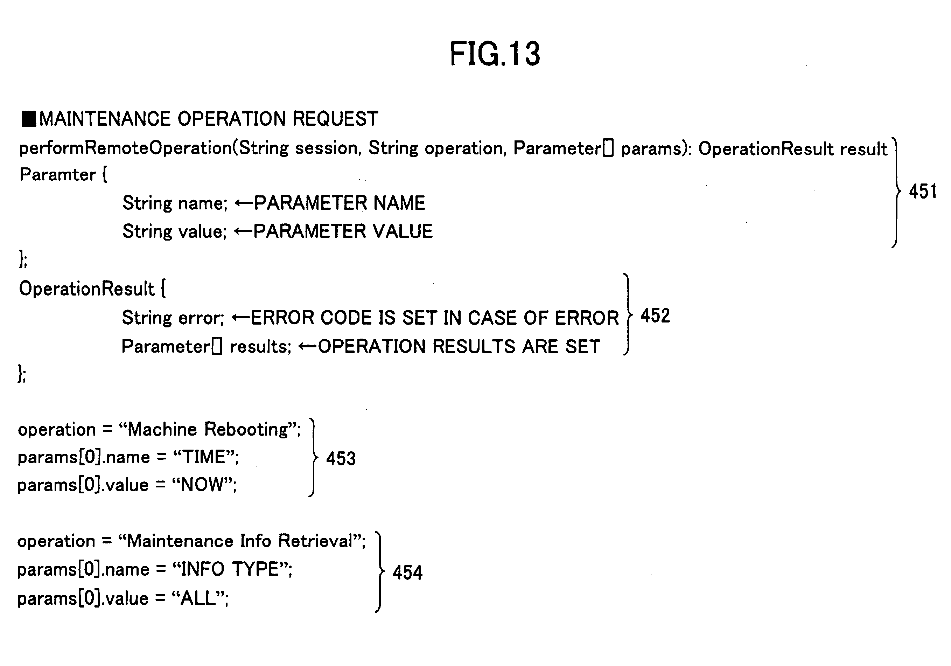

FIG. 13 shows an example of the SOAP interface when instructing the maintenance operation of the MFP.

As shown in FIG. 13, in the paragraph 451, "session", "operation", and "parameter" are used to specify the maintenance operation request. The result of maintenance operation is stored in the return value "result". For example, Session ID is stored in the "session" to identify the maintenance operation concerned. The classification of the maintenance operation is stored in the "operation". The parameter for performing the maintenance operation of the classification concerned is stored in the "parameter".

The 3rd to 4th lines of the paragraph 451 define the model of parameter. The name of the parameter is stored in the "name". The value of the parameter is stored in the "value". In the paragraph 452, the model of result in which the result of the maintenance operation is stored is defined. When the maintenance operation is not completed normally, the error code is stored in the "error", and the result of the maintenance operation is stored in the "result".

In the paragraphs 453 and 454, the contents of maintenance operation are defined. As a typical example, Machine Rebooting which performs the device rebooting as the maintenance operation is defined in the paragraph 453. Maintenance information retrieval which performs the maintenance information acquisition as the maintenance operation is defined in the paragraph 454.

In the case of the rebooting of the device, the 2nd to 3rd lines of the paragraph 453 define the timing at which the rebooting of the device is started from now on. In the case of the maintenance information acquisition, the 2nd to 3rd lines of the paragraph 454 define what type of maintenance information is acquired.

Referring back to FIG. 12, the maintenance processing unit 20 having received the SOAP interface transmits the request for judgment as to whether the maintenance operation concerned is permitted, to the policy judging processing unit 21 (S412).

The policy judging processing unit 21 receives the judgment request, and requests the acquisition of the current maintenance policy to the policy managing unit 25 (S413).

The policy managing unit 25 reads the current maintenance policy (S414), and outputs the same to the policy judging processing unit 21 (S415).

The policy judging processing unit 21 receives the current maintenance policy, compares the current maintenance policy with the contents of the maintenance operation requested by the remote maintenance center 3, and determines whether the requested maintenance operation is permitted according to the current maintenance policy (S416).

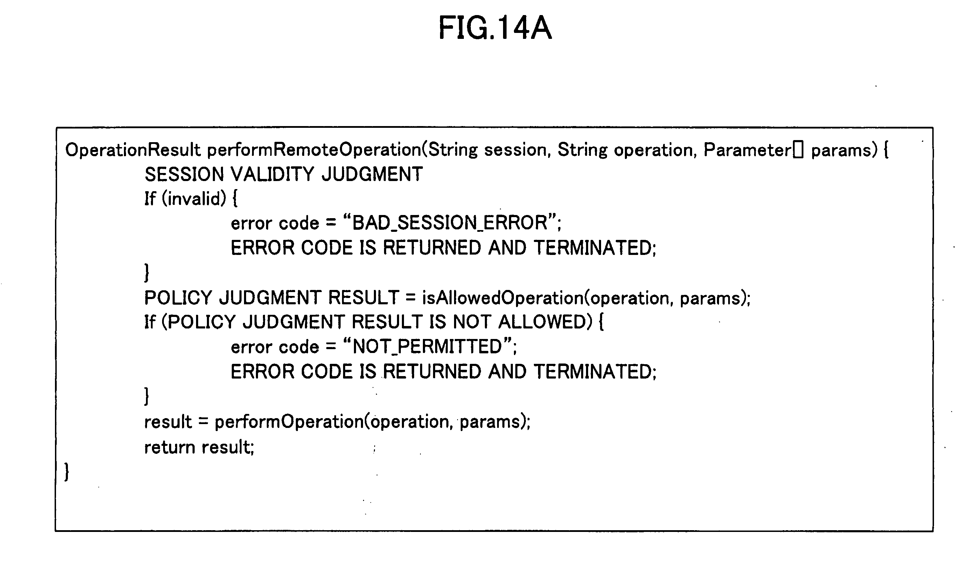

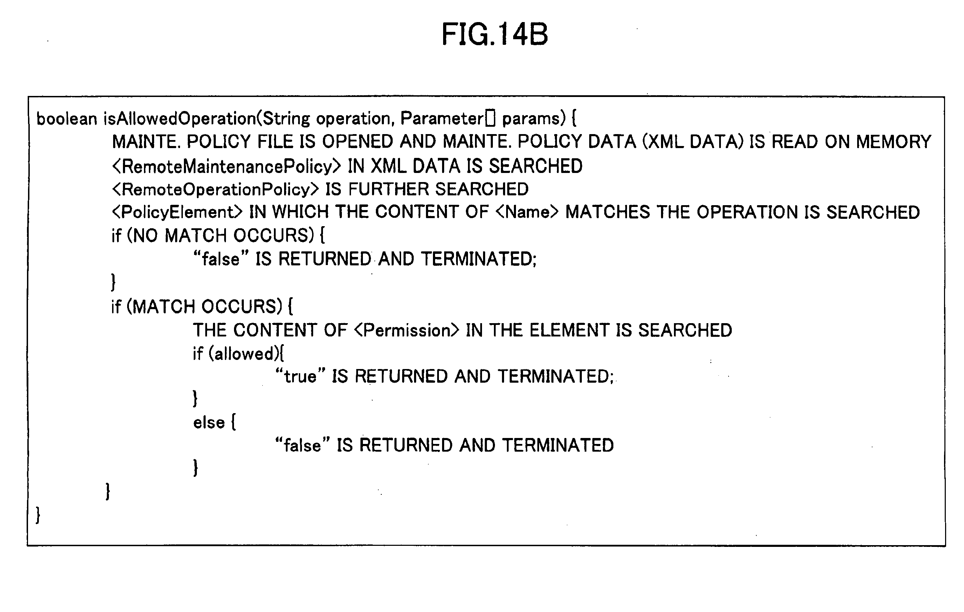

FIG. 14A and FIG. 14B show an example of the pseudo code of the SOAP interface in the judgment processing of the maintenance policy which is performed by the policy judging processing unit 21.

According to the SOAP interface "OperationResultperformRemoteOperation" of FIG. 14A, it is determined whether the session is valid. When the session is invalid, "BAD_SESSION_ERROR" is returned as the error code and the processing is finished. When the session is valid, in the "isAllowedOperation (operation and params)" of FIG. 14A, the parameter for the maintenance operation concerned is stored in the "params" and the classification of the maintenance operation is stored in the "operation" as a policy judgment result.

When the maintenance operation requested by the remote maintenance center 3 is not permitted according to the current maintenance policy, the "NOT_PERMITTED" is returned as the error code and the processing is finished.

More specifically, when the session is valid, the processing shown in FIG. 14B is performed. When the SOAP interface "is Allowed Operation (operation and params)" is called, the policy judging processing unit 21 opens the maintenance policy file (XML data), and reads the maintenance policy on the memory.

Subsequently, in the XML data explained with FIG. 7, the contents of the <Name> element in the <PolicyElement> element under the <RemoteMaintenancePolicy> element are searched for the match to the "operation".

When the matching of the <Name> element does not occur, the error code: false ("prohibition") is returned and the processing is finished. When the matching of the <Name> element occurs, by referring to the <Permission> element of the <Name> element concerned, it is determined whether the requested maintenance operation is permitted depending on whether the <Permission> element is "allowed" or "denied".

Referring back to FIG. 12, the policy judging processing unit 21 outputs the judgment result of whether the maintenance operation is permitted as a result of referring to the current maintenance policy, to the maintenance processing unit 20 (S417).

The maintenance processing unit 20 requests the processing of maintenance operation to the main function control unit 24 with respect to the permitted maintenance operation (S418).

The main function control unit 24 receives the maintenance operation request and performs the requested maintenance operation (S419).

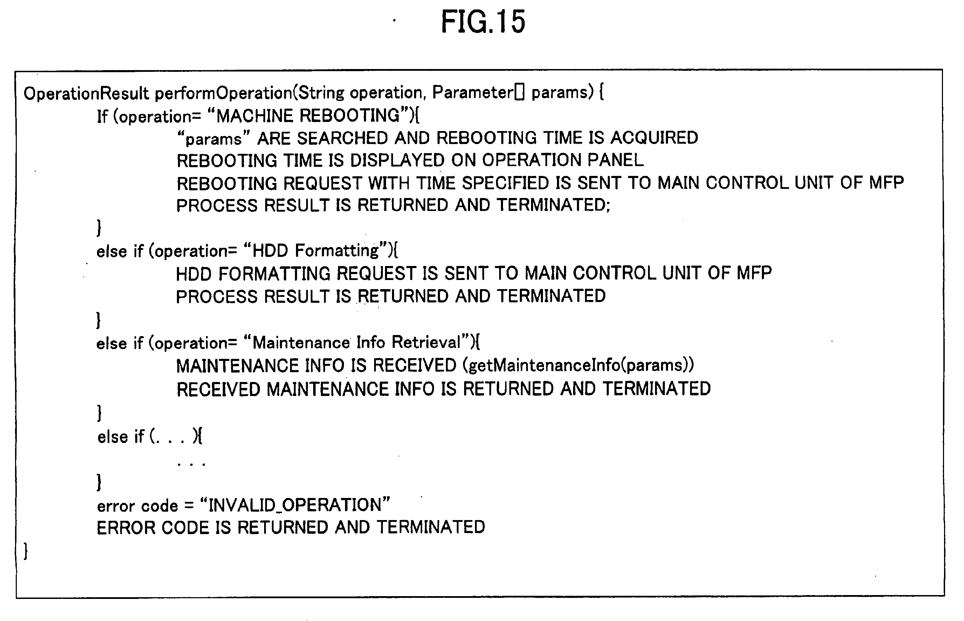

FIG. 15 shows an example of the pseudo code of the SOAP interface when the maintenance operation processing unit 24 performs the maintenance operation.

When the SOAP interface "OperationResult performOperation" is called, the contents of the maintenance operation are specified according to the contents of the "operation". The parameter required for the maintenance operation is stored in the "params". The "Machine Rebooting", the "HDD Formatting", and the "Maintenance Info Retrieval" are described as a typical example in the pseudo code of FIG. 15.

When the "operation" is Machine Rebooting, the time of the rebooting is acquired by referring to the "params". Subsequently, the time of the rebooting is displayed on the touch panel of the MFP 2, and the command of the rebooting which specifies the time is outputted to the main function control unit of the MFP 2.

When the "operation" is HDD Formatting, the formatting of the HDD is requested to the main function control unit of the MFP 2. When the "operation" is Maintenance Info Retrieval, the command of the maintenance information acquisition is outputted. In any processing, the processing result is returned and then the processing is completed.

Returning to FIG. 12, the maintenance operation processing unit 24 outputs the return value etc. to the maintenance processing unit 20 (S420).

The maintenance processing unit 20 transmits the return value concerned to the remote maintenance center 3 (S421). Then, the maintenance operation by the remote maintenance center 3 is completed.

In the processing of FIG. 12, the challenge/response method is used as the authentication method of the remote maintenance center 3. Alternatively, another authentication method may be used. In the case where there is the network environment which can establish the session of SSL (secure socket layer) between the remote maintenance center 3 and the MFP 2 for the maintenance, the authentication method may be configured so that the remote maintenance center 3 is authenticated using the SSL in order to prevent the alteration and wiretapping of the maintenance operation exchanged after the authentication.

Moreover, in the processng of FIG. 12, the function to perform the maintenance operation is made into the main function control unit 24. Alternatively, in the case of performing the maintenance operation to clear the number-of-copy-sheets counter of the MFP 2, the function of maintenance operation may be made into the maintenance information managing unit 23, for example.

When the result of authentication of the remote maintenance center 3 is an error, the maintenance operation request is not accepted and the error is notified to the remote maintenance center 3, and the processing is finished.

Next, the transmission of the maintenance information from the MFP to the remote maintenance center will be explained.

The MFP 2 is the timing set as the automatic transmit interval of the maintenance policy, and transmits maintenance information for periodic maintenance information to the remote maintenance center 3. Thereby, the remote maintenance center 3 can acquire the maintenance information, such as the toner residual quantity and the accumulating total of the number of copy sheets, and can perform the remote maintenance operation of the MFP 3 according to the maintenance information received.

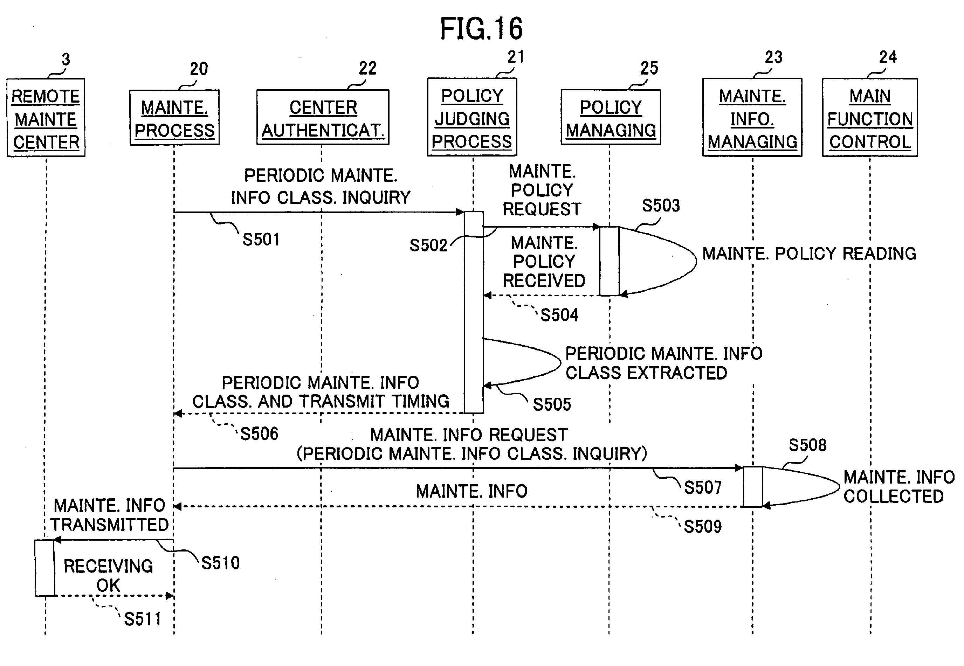

FIG. 16 is the sequence diagram for explaining an example of the control procedure when the MFP 2 for the maintenance transmits the periodic maintenance information specified by the maintenance policy, to the remote maintenance center 3 at the automatic transmit interval.

As shown in FIG. 16, the maintenance processing unit 20 first requests to the policy judging processing unit 21 the classification of the periodic maintenance information (S501).

The policy judging processing unit 21 receives the request from the maintenance processing unit 20 and requests the acquisition of the current maintenance policy to the policy managing unit 25 (S502).

The policy managing unit 25 reads the current maintenance policy (S503). The policy managing unit 25 outputs the current maintenance policy to the policy judging processing unit 21 (S504).

The policy judging processing unit 21 receives the current maintenance policy and extracts the classification of the maintenance information currently recorded in the classification of periodic maintenance information of the maintenance policy (S505).

Moreover, the policy judging processing unit 21 extracts the time interval set up in the automatic transmit interval of the maintenance policy (S505).

The periodic maintenance information and the automatic transmit interval which are extracted are outputted to the maintenance processing unit 20 (S506).

The maintenance processing unit 20 requests to the maintenance information managing unit 23 the acquisition of the periodic maintenance information (S567).

The maintenance information managing unit 23 acquires the periodic maintenance information requested by the maintenance processing unit 20 (S508), and outputs the same to the maintenance managing unit 21 (S509).

The maintenance processing unit 20 transmits the periodic maintenance information received from the maintenance information managing unit 23, to the remote maintenance center 3 according to the automatic transmit interval (S510).

The remote maintenance center 3 receives the maintenance information, and transmits the signal indicating that the maintenance information is received normally, to the maintenance processing unit 20 (S511). Thus, the processing which transmits the maintenance information to the remote maintenance center 3 from the MFP 2 is completed. The MFP 2 repeats the processing of FIG. 16 according to the automatic transmit interval.

Alternatively, the processing of FIG. 16 may be configured so that only when the maintenance policy is updated, the extraction of the automatic transmit interval is performed.

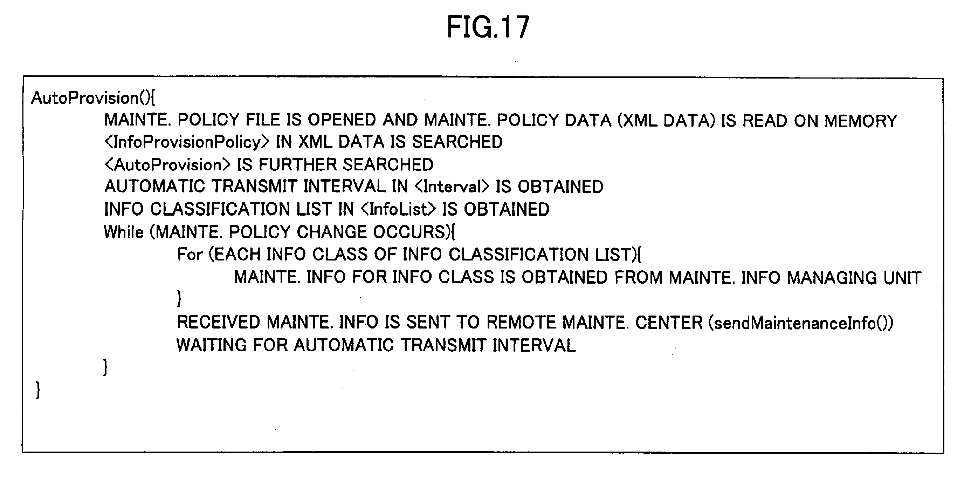

FIG. 17 shows an example of the pseudo code of the SOAP interface when the maintenance processing unit 20 performs the processing which transmits the periodic maintenance information to the remote maintenance center 3 at the automatic transmit interval of the maintenance policy.

The processing using the SOAP interface of FIG. 17 is started by the maintenance processing unit 20 in response to the signal indicating that the new maintenance policy is set up.

The maintenance processing unit 20 calls the SOAP interface "AutoProvision" as shown in FIG. 17.

The policy managing unit 25 opens the maintenance policy file (XML data) in the maintenance policy database, and reads the maintenance policy on the memory.

Subsequently, in the XML data as shown in FIG. 7, the automatic transmit interval of the maintenance policy is extracted from the <Interval> element in the <AutoProvision> element of the low rank of the <InfoProvisionPolicy> element. Then, the policy managing unit 25 acquires the list of information classification currently set up under the <InfoList> element. Thereby, the classification of the periodic maintenance information and the automatic transmit interval at which the maintenance information is transmitted are acquired.

For every automatic transmit interval, the maintenance processing unit 20 acquires the periodic maintenance information from the maintenance information managing unit 23, and transmits the acquired maintenance information to the remote maintenance center 3. The processing which transmits the maintenance policy for every automatic transmit interval is repeatedly performed until the maintenance policy is updated by the administrator.

Next, the SOAP interface which transmits the maintenance information from the MFP 2 to the remote maintenance center 3 will be explained.

When the periodic maintenance information is transmitted from the MFP 2 to the remote maintenance center 3, the MFP 2 calls the SOAP interface "sendMaintenanceInfo(byte[]random and byte[] authCode, String targetId, and Parameter[]params): String error" which is provided by the remote maintenance center 3.

In the SOAP interface concerned, the parameters for authenticating the MFP for the maintenance are stored in the "random" and the "authCode", and the identification information of MFP for the maintenance is stored in the "targetId".

Moreover, the maintenance information transmited is stored in the "params". For example, the part number "23094203-777635" is stored in the params[0].valu and "Machine Number" is stored in the params[0].name. Moreover, "Firmware Versions" is stored in the params[1].name, and the firmware version "OS: 5.05, Main: 2.00, Sub: 1.01" is stored in the params[1].value.

Through the communication between the MFP2 and the remote maintenance center 3 using the SOAP interface called by the MFP 2, the remote maintenance center 3 can receive the identification information and the maintenance information of the MFP concerned.

In addition, it is desirable to carry out the transmission and receiving of these SOAP messages by using the HTTP protocol (HTTPS) on the SSL in order to prevent the alteration and wiretapping of the maintenance operation and the maintenance information.

In the processing of FIG. 16, the remote maintenance center 3 is not authenticated since the processing is started by the MFP 2 for the maintenance which transmits the maintenance information according to the automatic transmit interval. Alternatively, the processing of FIG. 16 may be configured so that the remote maintenance center 3 is authenticated, in order to prevent sending of the maintenance information to the computer which is not the remote maintenance center 3.

Moreover, the processing of FIG. 16 may be configured without using the center authentication such that the encoded maintenance information which is created using the high-speed cryptographic algorithm, such as the DES (data encryption standard), and can be decoded only by the remote maintenance center 3 is transmitted together with the primary key to the remote maintenance center 3. The primary key is used for encoding the maintenance information. In such alternative embodiment, the remote maintenance center 3 receives the encoded maintenance information and the primary key, decodes the received primary key using the public key of the remote maintenance center 3 through the public-key cryptographic algorithm, such as RSA, and decodes the received maintenance information using the primary key thus obtained.

Moreover, in the case of the network environment which can establish the session of SSL (secure socket layer) between the remote maintenance center and the device for the maintenance, a series of cipher processing using SSL may be performed so that the maintenance information can be transmitted to the remote maintenance center while preventing the wiretapping of the third person.

Next, the case where the fire wall is set up will be explained.

It is assumed that the MFP 2 is connected to the user's internal network, and it is assumed that the fire wall is installed between the Internet 1 and the internal network 4.

Therefore, if the HTTP or SMTP is used as the communication protocol to transmit the maintenance information from the MFP 2 to the maintenance center 3, such alternative embodment is desirable because it is not necessary to perform a special setting to the fire wall and the transmission of maintenance information is possible.

Moreover, starting the communication to the Internet from the internal network is permitted by the fire wall but the communication from the Internet to the internal network may be blocked by the fire wall. In such a case, the inquiry about whether a maintenance operation command is sent from the remote maintenance center 3 is transmitted from the MFP 2 to the remote maintenance center 3, and the MFP 2 can receive the maintenance operation command from the remote maintenance center 3 in the response to the inquiry concerned.

The communication is started from the internal network and the communication from the external network is enabled without changing the setup of the fire wall. This enables processing of the maintenance operation command of the maintenance center according to the user's maintenance policy. For example, the MFP 2 calls the SOAP interface "getRequest (byte[]random, byte[] authCode, string targetId): string soapRequestEnvelope" from the remote maintenance center 3. This SOAP interface is usually provided by the remote maintenance center 3. The parameters for authenticating the MFP as the candidate device for the maintenance are stored in the "random" and the "authCode" of the SOAP interface concerned, and the identification information of the MFP for the maintenance is stored in the "targetId".

When the SOAP interface which is called by the MFP 2 is transmitted to the remote maintenance center 3, the remote maintenance center 3 stores in the "soapRequestEnvelope" any of the "getChallenge", the "internalAuthenticate" and the "performRemoteOperation" which are the commands sent from the remote maintenance center 3 side. Then, the remote maintenance center 3 sends such "soapRequestEnvelope" back to the MFP 2.

When the challenge is stored in the "getChallenge", the MFP 2 communicates with the remote maintenance center 3 using the SOAP interface "putResult (string soapResultEnvelope): string error". The SOAP envelope having the return value and the out argument of the "getChallenge", the "internalAuthenticate" or the "performRemoteOperation" is stored in the "soapResultEnvelope".

Even if there is the fire wall, the MFP 2 as the object of maintenance operation sends periodically the inquiry to the remote maintenance center 3, and the remote maintenance center 3 can perform the remote maintenance operation of the MFP 2 at the predetermined interval. The predetermined interval may be the same as the automatic transmit interval, and the transmission of the inquiry may be made at the predetermined time once every day, or may be made for every minute.

Next, the program which provides the function of the remote maintenance will be explained.

In the previously described embodiments, the device for the maintenance is the MFP 2. Alternatively, the computer which provides the predetermined functions, such as the electronic-filing-document managing server, or the image forming device which has the single function, such as the printer, may be the device for the maintenance.

Although the maintenance information and the contents of maintenance operation will change if the device for the maintenance changes, the basic concept of controlling the remote maintenance according to the maintenance policy is the same as that of the MFP 2.

The functions of the remote maintenance can be provided as the software. When providing the same as the software, it is possible to provide the recording medium, such as FD, CD-ROM, or a memory card, in which the program of the remote maintenance is recorded therein.

Especially in the case of the electronic-filing-document managing server, providing the function of the remote maintenance in the form of the program is preferred. Thereby, in the software of the electronic-filing-document managing server, performing the remote maintenance operation, such as upgrading of the software, is possible.

If the program of the remote maintenance can be provided as the single product, it is possible to add the function of the remote maintenance after purchasing of the MFP. Thus, it becomes possible to carry out the additional introduction of the function of the remote maintenance later, rather than providing the MFP or the electronic-filing-document managing server in which the function of the remote maintenance is already installed therein.

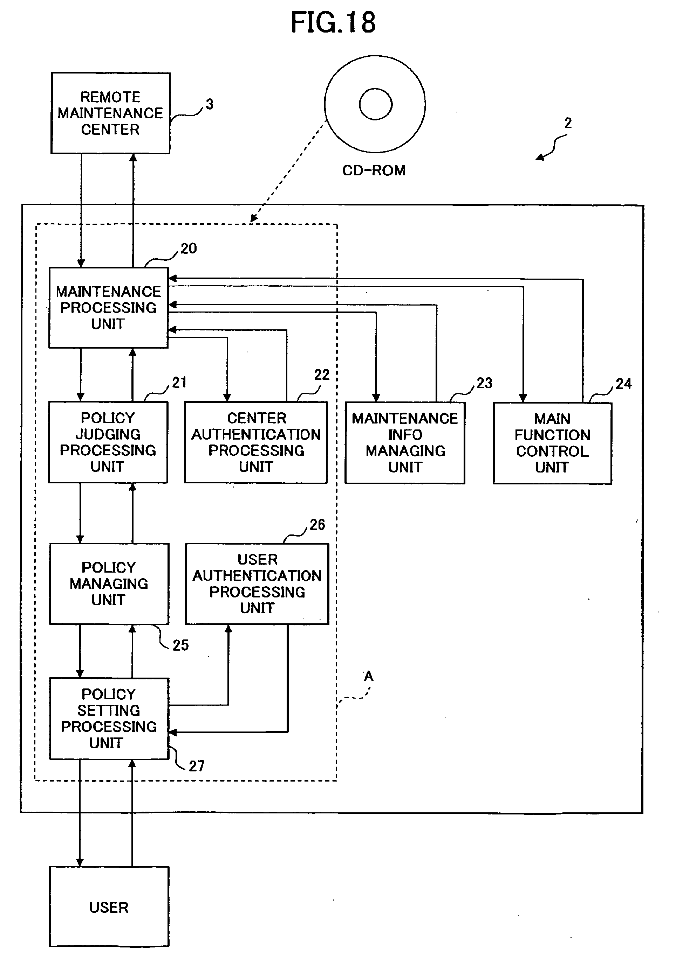

FIG. 18 shows an example of the function of the remote maintenance which can be added by the software. The function units surrounded by the dotted line A in FIG. 18 are an example of the functions which can be provided by the program as the optional part. When providing the software as the optional part in the case of MFP later, providing the recording media, such as a memory card or a DIMM (dual inline memory module) in which the software is recorded is desirable.

According to the above embodiments, it is possible to provide the network communication device the maintenace of which can be performed remotely from the external network in accordance with the maintenance policy specified by the user, as well as the method of maintenance of the network communication device, the program, the recording medium, and the maintenance system.

According to the maintenance policy specified by the user, the maintenance information can be periodically transmitted to the remote maintenance center 3. Since the maintenance information can be enciphered and transmitted, the alteration and wiretapping of the maintenance information can be prevented. When the maintenance operation command is received from the maintenance center, only the maintenance operation permitted by the maintenance policy is performed on the network communication device.

Moreover, since the maintenance policy can be set up on every the MFP 2, the maintenance according to the policy of the maintenance of the user can be attained. The administrator is authenticated when inputting the maintenance policy, and when inputting the maintenance policy using the recording medium, the electronic signature processing is performed. Thus, the alteration of the maintenance policy by the third person can be prevented.

Moreover, even if there is the fire wall, the MFP 2 can receive the maintenance operation command in the response to the inquiry sent from the MFP 2 to the maintenance center 3 or by the transmission of the periodical maintenance information from the MFP 2 to the maintenance center 3. The XML data and the SOAP message are used for the communication between the MFP 2 and the remote maintenance center 3. Thus, the remote maintenance operation of the MFP 2 is carried out without being dependent on the OS or the architecture.

The present invention is not limited to the above-described embodiments, and variations and modifications may be made without departing from the scope of the present invention.

Further, the present application is based on and claims the benefit of priority of Japanese patent application No. 2004-101063, filed on March 30, 2004, the entire contents of which are hereby incorporated by reference.

## Claims

1. A multi-function peripheral (2) which is connected to a maintenance center (3) through the Internet (1), comprising:
a maintenance policy database in which a maintenance policy is stored, the maintenance policy (5) adapted to specify either transmission of maintenance information related to maintenance of the multi-function peripheral (2) or a maintenance operation of the multi-function peripheral (2) requested by the maintenance center (3);
a maintenance information transmitting unit adapted to transmit the maintenance information to the maintenance center (3) by referring to the maintenance policy database;
a maintenance operation command receiving unit adapted to receive a maintenance operation command requested by the maintenance center (3); and
a maintenance operation control unit adapted to perform the maintenance operation command received by the maintenance operation command receiving unit, by referring to the maintenance policy database (29),
**characterized in that**
the maintenance policy database (29) is directly connected with the multi-function peripheral (2) wherein the maintenance policy database (29) is not connected with the multi-function peripheral (2) via the Internet (1),
**in that** the maintenance policy stored in the maintenance policy database (29) is adapted to specify whether the maintenance operation of the multi-function peripheral (2) is permitted by the maintenance center (3), and
**in that** the multi-function peripheral (2) further comprises an administrator authentication processing unit which is adapted to authenticate an administrator who manages the multi-function peripheral; and a maintenance policy renewal unit adapted to update the maintenance policy database by a new maintenance policy inputted by the administrator who is authenticated by the administrator authentication processing unit.

2. The multi-function peripheral (2) according to claim 1 wherein the maintenance policy (5) is provided to specify a periodic maintenance information which is contained in the maintenace information and transmitted to the maintenance center automatically, and a timing at which the periodic maintenance information is transmitted to the maintenance center (3).

3. The multi-function peripheral (2) according to claim 2 further comprising a maintenance information collecting unit adapted to collect the periodic maintenance information, and the maintenance information transmitting unit adapted to transmit the periodic maintenance information, collected by the maintenance information collecting unit, to the maintenance center (3) at the timing specified by the maintenance policy (5).

4. The multi-function peripheral (2) according to claim 1 further comprising an operation inquiry unit adapted to transmit an inquiry about the maintenance operation command to the maintenance center (3), wherein the maintenance operation command receiving unit is adapted to receive the maintenance operation command which is transmitted by the maintenance center (3) in response to either the inquiry transmitted from the operation inquiry unit or a periodic maintenance information transmitted from the maintenance information transmitting unit.

5. The multi-function peripheral (2) according to claim 1 further comprising a maintenance center authentication unit adapted to authenticate the maintenance center (3) when the maintenance operation command receiving unit receives the maintenance operation command from the maintenance center (3) or when the maintenance information transmitting unit transmits a periodic maintenance information to the maintenance center (3).

6. The multi-function peripheral (2) according to claim 1 wherein the maintenance information transmitted by the maintenance information transmitting unit is enciphered.

7. The multi-function peripheral (2) according to any one of claims 1 to 6 wherein the maintenance policy renewal unit is provided to convert the maintenance policy (5) inputted by the administrator, into an XML data so that the maintenance policy database is updated.

8. The multi-function peripheral (2) according to any one of claims 1 to 6 wherein the maintenance policy renewal unit is provided to update the maintenance policy database using a recording medium in which a maintenance policy (5) described in XML is recorded.

9. The multi-function peripheral (2) according to any one of claims 1 to 6 wherein the maintenance policy renewal unit is provided to updating the maintenance policy database by a maintenance policy (5) inputted from a terminal connected to the network.

10. A method of maintenace of a multi-function peripheral (2) which is connected to a maintenance center (3) through the Internet (1) and equipped with a maintenance policy database wherein the maintenance policy database stores a maintenance policy (5) specifying either transmission of maintenance information related to maintenance of the multi-function peripheral (2) or a maintenance operation of the multi-function peripheral (2) requested by the maintenance center (3), the method comprising the steps of:
transmitting the maintenance information to the maintenance center (3) by referring to the maintenance policy database;
receiving a maintenance operation command requested by the maintenance center; and
performing the received maintenance operation command by referring to the maintenance policy database (29),
**characterized in that**
the maintenance policy database (29) is directly connected with the multi-function peripheral wherein the maintenance policy database (29) is not connected with the multi-function peripheral (2) via the Internet (1),
**in that** the maintenance policy stored in the maintenance policy database (29) is adapted to specify whether the maintenance operation of the multi-function peripheral (2) is permitted by the maintenance center (3) and **in that** the method further comprising the steps of:
authenticating an administrator who manages the multi-function peripheral (2); and
updating the maintenance policy database by a new maintenance policy (5) inputted by the administrator who is authenticated in the authenticating step.

11. The method according to claim 10 wherein the maintenance policy (5) is provided to specify a periodic maintenance information which is contained in the maintenace information and transmitted to the maintenance center (3) automatically, and a timing at which the periodic maintenance information is transmitted to the maintenance center (3).

12. The method according to claim 11 further comprising the step of collectting the periodic maintenance information, wherein the collected periodic maintenance information is transmitted to the maintenance center (3) at the timing specified by the maintenance policy (5).

13. The method according to claim 10 further comprising the step of transmitting an inquiry about the maintenance operation command to the maintenance center (3) from the multi-function peripheral (2), wherein the maintenance operation command which is transmitted by the maintenance center (3) in response to either the inquiry transmitted from the multi-function peripheral (2) or a periodic maintenance information transmitted from the multi-function peripheral (2) is received in the receiving step.

14. The method according to claim 10 further comprising the step of authenticating the maintenance center (3) when the maintenance operation command is received from the maintenance center (3).

15. The method according to claim 10 further comprising the step of authenticating the maintenance center (3) when a periodic maintenance information is transmitted to the maintenance center (3) from the multi-function peripheral (2).

16. The method according to claim 10 further comprising the step of enciphering the maintenance information transmitted in the transmitting step.

17. The method according to any one of claims 10 to 16 wherein, in the updating step, the maintenance policy (5) inputted by the administrator is converted into an XML data, so that the maintenance policy database is updated.

18. The method according to any one of claims 1 to 16 wherein the updating step is provided to update the maintenance policy database using a recording medium in which a maintenance policy (5) described in XML is recorded.

19. The method according to any one of claims 10 to 16 wherein the updating step is provided to update the maintenance policy database by a maintenance policy (5) inputted from a terminal connected to the network (1).

20. A computer program product comprising computer program code adapted to cause a computer to execute of the method according to any of claims 10 to 19.

21. A computer-readable recording medium comprising computer program code adapted to cause a computer to execute the method according to any of claims 10 to 19.

22. A maintenance system which includes a maintenance center (3) and a multi-function peripheral (2) connected to the maintenance center (3) through a network (1), the maintenance center (3) performing a maintenance operation of the multi-function peripheral (2), the multi-function peripheral (2) comprising:
a maintenance policy database in which a maintenance policy (5) is stored, the maintenance policy (5) specifying either transmission of maintenance information related to maintenance of the mutli-function peripheral (2) or a maintenance operation of the multi-function peripheral (2) requested by the maintenance center (3); and
a maintenance information transmitting unit transmitting the maintenance information to the maintenance center (3) by referring to the maintenance policy database,
the maintenance center (3) comprising:
a maintenance information receiving unit receiving the maintenance information from the multi-function peripheral (2); and
a maintenance operation command unit transmitting a maintenance operation command to the multi-function peripheral (2) based on the received maintenance information, and
the multi-function peripheral (2) further comprising:
a maintenance operation command receiving unit receiving the maintenance operation command from the maintenance center (3); and
a maintenance operation control unit performing the received maintenance operation command by referring to the maintenance policy database,
**characterized in that**
the maintenance policy database (29) is directly connected with the multi-function peripheral (2) wherein the maintenance policy database (29) is not connected with the multi-function peripheral (2) via the Internet (1),
**in that** the maintenance policy stored in the maintenance policy database (29) is adapted to specify whether the maintenance operation of the multi-function peripheral (2) is permitted by the maintenance center (3), and
**in that** the multi-function peripheral (2) further comprises an administrator authentication processing unit which is adapted to authenticate an administrator who manages the multi-function peripheral; and a maintenance policy renewal unit adapted to update the maintenance policy database by a new maintenance policy inputted by the administrator who is authenticated by the administrator authentication processing unit.

## Patentansprüche

1. Multifunktionales Peripheriegerät (2), das über das Internet (1) mit einer Wartungszentrale (3) verbunden ist und umfasst:
eine Wartungsrichtlinien-Datenbank, in der eine Wartungsrichtlinie gespeichert ist, wobei die Wartungsrichtlinie (5) dazu ausgelegt ist, entweder die Übertragung von Wartungsinformationen, die mit der Wartung des multifunktionalen Peripheriegeräts (2) in Beziehung stehen, oder eine Wartungsoperation des multifunktionalen Peripheriegeräts (2), die durch die Wartungszentrale (3) gefordert wird, zu spezifizieren;
eine Wartungsinformations-Sendeeinheit, die dazu ausgelegt ist, die Wartungsinformationen unter Bezugnahme auf die Wartungsrichtlinien-Datenbank zu der Wartungszentrale (3) zu senden;
eine Wartungsoperationsbefehl-Empfangseinheit, die dazu ausgelegt ist, einen Wartungsoperationsbefehl, der von der Wartungszentrale (3) gefordert wird, zu empfangen; und
eine Wartungsoperations-Steuereinheit, die dazu ausgelegt ist, den von der Wartungsoperations-Empfangseinheit empfangenen Wartungsoperationsbefehl unter Bezugnahme auf die Wartungsrichtlinien-Datenbank (29) auszuführen,
**dadurch gekennzeichnet,**
**dass** die Wartungsrichtlinien-Datenbank (29) direkt mit dem multifunktionalen Peripheriegerät (2) verbunden ist, wobei die Wartungsrichtlinien-Datenbank (29) mit dem multifunktionalen Peripheriegerät (2) nicht über das Internet verbunden ist,
**dass** die in der Wartungsrichtlinien-Datenbank (29) gespeicherte Wartungsrichtlinie dazu ausgelegt ist, zu spezifizieren, ob die Wartungsoperation des multifunktionalen Peripheriegeräts (2) durch die Wartungszentrale (3) erlaubt ist, und
**dass** das multifunktionale Peripheriegerät (2) ferner eine Administratorauthentifizierungs-Verarbeitungseinheit, die dazu ausgelegt ist, einen Administrator, der das multifunktionale Peripheriegerät managt, zu authentifizieren; und eine Wartungsrichtlinien-Erneuerungseinheit, die dazu ausgelegt ist, die Wartungsrichtlinien-Datenbank durch eine neue Wartungsrichtlinie zu aktualisieren, die von dem Administrator eingegeben wird, der durch die Administratorauthentifizierungs-Verarbeitungseinheit authentifiziert worden ist, umfasst.

2. Multifunktionales Peripheriegerät (2) nach Anspruch 1, wobei die Wartungsrichtlinie (5) bereitgestellt wird, um periodische Wartungsinformationen zu spezifizieren, die in den Wartungsinformationen enthalten sind und automatisch zu der Wartungszentrale gesendet werden, und um eine Zeitvorgabe zu spezifizieren, mit der die periodischen Wartungsinformationen zu der Wartungszentrale (3) gesendet werden.

3. Multifunktionales Peripheriegerät (2) nach Anspruch 2, das ferner eine Wartungsinformations-Sammeleinheit umfasst, die dazu ausgelegt ist, die periodischen Wartungsinformationen zu sammeln, wobei die Wartungsinformations-Sendeeinheit dazu ausgelegt ist, die periodischen Wartungsinformationen, die von der Wartungsinformations-Sammeleinheit gesammelt werden, zu der Wartungszentrale (3) mit der durch die Wartungsrichtlinie (5) spezifizierten Zeitvorgabe zu senden.

4. Multifunktionales Peripheriegerät (2) nach Anspruch 1, das ferner eine Operationsabfrageeinheit umfasst, die dazu ausgelegt ist, eine Abfrage bezüglich des Wartungsoperationsbefehls zu der Wartungszentrale (3) zu senden, wobei die Wartungsoperationsbefehl-Empfangseinheit dazu ausgelegt ist, den Wartungsoperationsbefehl zu empfangen, der von der Wartungszentrale (3) in Reaktion entweder auf die von der Operationsabfrageeinheit gesendete Abfrage oder auf von der Wartungsinformations-Sendeeinheit gesendete periodische Wartungsinformationen gesendet werden.

5. Multifunktionales Peripheriegerät (2) nach Anspruch 1, das ferner eine Wartungszentralen-Authentifizierungseinheit umfasst, die dazu ausgelegt ist, die Wartungszentrale (3) zu authentifizieren, wenn die Wartungsoperationsbefehl-Empfangseinheit den Wartungsoperationsbefehl von der Wartungszentrale (3) empfängt oder wenn die Wartungsinformations-Sendeeinheit periodische Wartungsinformationen zu der Wartungszentrale (3) sendet.

6. Multifunktionales Peripheriegerät (2) nach Anspruch 1, wobei die von der Wartungsinformations-Sendeeinheit gesendeten Wartungsinformationen verschlüsselt sind.

7. Multifunktionales Peripheriegerät (2) nach einem der Ansprüche 1 bis 6, wobei die Wartungsrichtlinien-Erneuerungseinheit vorgesehen ist, um die von dem Administrator eingegebene Wartungsrichtlinie (5) in XML-Daten umzusetzen, so dass die Wartungsrichtlinien-Datenbank aktualisiert wird.

8. Multifunktionales Peripheriegerät (2) nach einem der Ansprüche 2 bis 6, wobei die Wartungsrichtlinien-Erneuerungseinheit vorgesehen ist, um die Wartungsrichtlinien-Datenbank unter Verwendung eines Aufzeichnungsmediums zu aktualisieren, in dem eine in XML beschriebene Wartungsrichtlinie (5) aufgezeichnet ist.

9. Multifunktionales Peripheriegerät (2) nach einem der Ansprüche 1 bis 6, wobei die Wartungsrichtlinien-Erneuerungseinheit vorgesehen ist, um die Wartungsrichtlinien-Datenbank durch eine Wartungsrichtlinie (5), die von einem mit dem Netz verbundenen Endgerät eingegeben wird, zu aktualisieren.

10. Verfahren für die Wartung eines multifunktionalen Peripheriegeräts (2), das mit einer Wartungszentrale (3) über das Internet (1) verbunden ist und mit einer Wartungsrichtlinien-Datenbank ausgerüstet ist, wobei die Wartungsrichtlinien-Datenbank eine Wartungsrichtlinie speichert, die entweder das Senden von Wartungsinformationen, die mit der Wartung des multifunktionalen Peripheriegeräts (2) in Beziehung stehen, oder eine Wartungsoperation des multifunktionalen Peripheriegeräts (2), die durch die Wartungszentrale (3) gefordert wird, spezifiziert, wobei das Verfahren die folgenden Schritte umfasst:
Senden der Wartungsinformationen zu der Wartungszentrale (3) unter Bezugnahme auf die Wartungsrichtlinien-Datenbank;
Empfangen eines Wartungsoperationsbefehls, der von der Wartungszentrale gefordert wird; und
Ausführen des empfangenen Wartungsoperationsbefehls unter Bezugnahme auf die Wartungsrichtlinien-Datenbank (29),
**dadurch gekennzeichnet, dass**
die Wartungsrichtlinien-Datenbank direkt mit dem multifunktionalen Peripheriegerät verbunden ist, während die Wartungsrichtlinien-Datenbank (29) mit dem multifunktionalen Peripheriegerät (2) nicht über das Internet (1) verbunden ist,
dass die in der Wartungsrichtlinien-Datenbank (29) gespeicherte Wartungsrichtlinie dazu ausgelegt ist, zu spezifizieren, ob die Wartungsoperation des multifunktionalen Peripheriegeräts (2) durch die Wartungszentrale (3) erlaubt ist, und dass das Verfahren ferner die folgenden Schritte umfasst:
Authentifizieren eines Administrators, der das multifunktionale Peripheriegerät (2) managt; und
Aktualisieren der Wartungsrichtlinien-Datenbank durch eine neue Wartungsrichtlinie (5), die durch den Administrator eingegeben wird, der im Authentifizierungsschritt authentifiziert worden ist.

11. Verfahren nach Anspruch 10, wobei die Wartungsrichtlinie (5) vorgesehen ist, um periodische Wartungsinformationen, die in den Wartungsinformationen enthalten sind und zu der Wartungszentrale (3) automatisch gesendet werden, und eine Zeitvorgabe, mit der die periodischen Wartungsinformationen zu der Wartungszentrale (3) gesendet werden, zu spezifizieren.

12. Verfahren nach Anspruch 11, das ferner den Schritt des Sammelns der periodischen Wartungsinformationen umfasst, wobei die gesammelten periodischen Wartungsinformationen zu der Wartungszentrale (3) mit der durch die Wartungsrichtlinie (5) spezifizierten Zeitvorgabe gesendet werden.

13. Verfahren nach Anspruch 10, das ferner den Schritt des Sendens einer Abfrage bezüglich des Wartungsoperationsbefehls von dem multifunktionalen Peripheriegerät (2) zu der Wartungszentrale (3) umfasst, wobei der Wartungsoperationsbefehl, der von der Wartungszentrale (3) in Reaktion entweder auf die von dem multifunktionalen Peripheriegerät (2) gesendete Abfrage oder auf periodische Wartungsinformationen, die von dem multifunktionalen Peripheriegerät (2) gesendet werden, gesendet wird, im Empfangsschritt empfangen werden.

14. Verfahren nach Anspruch 10, das ferner den Schritt des Authentifizierens der Wartungszentrale (3), wenn der Wartungsoperationsbefehl von der Wartungszentrale (3) empfangen wird, umfasst.

15. Verfahren nach Anspruch 10, das ferner den Schritt des Authentifizierens der Wartungszentrale (3), wenn periodische Wartungsinformationen von dem multifunktionalen Peripheriegerät (2) zu der Wartungszentrale (3) gesendet werden, umfasst.

16. Verfahren nach Anspruch 10, das ferner den Schritt des Verschlüsselns der im Sendeschritt gesendeten Wartungsinformationen umfasst.

17. Verfahren nach einem der Ansprüche 10 bis 16, wobei in dem Aktualisierungsschritt die Wartungsrichtlinie (5), die von dem Administrator eingegeben wird, in XML-Daten umgesetzt wird, so dass die Wartungsrichtlinien-Datenbank aktualisiert wird.

18. Verfahren nach einem der Ansprüche 1 bis 16, wobei der Aktualisierungsschritt vorgesehen ist, um die Wartungsrichtlinien-Datenbank unter Verwendung eines Aufzeichnungsmediums zu aktualisieren, indem eine in XML beschriebene Wartungsrichtlinie (5) aufgezeichnet ist.

19. Verfahren nach einem der Ansprüche 10 bis 16, wobei der Aktualisierungsschritt vorgesehen ist, um die Wartungsrichtlinien-Datenbank durch eine Wartungsrichtlinie (5), die von einem mit dem Netz (1) verbundenen Endgerät eingegeben wird, zu aktualisieren.

20. Computerprogrammprodukt, das Computerprogrammcode enthält, der dazu ausgelegt ist, einen Computer dazu zu veranlassen, das Verfahren nach einem der Ansprüche 10 bis 19 auszuführen.

21. Computerlesbares Aufzeichnungsmedium, das Computerprogrammcode enthält, der dazu ausgelegt ist, einen Computer dazu zu veranlassen, das Verfahren nach einem der Ansprüche 10 bis 19 auszuführen.

22. Wartungssystem, das eine Wartungszentrale (3) und ein multifunktionales Peripheriegerät (2), das mit der Wartungszentrale (3) über ein Netz (1) verbunden ist, umfasst, wobei die Wartungszentrale (3) eine Wartungsoperation des multifunktionalen Peripheriegeräts (2) ausführt, wobei das multifunktionale Peripheriegerät (2) umfasst:
eine Wartungsrichtlinien-Datenbank, in der eine Wartungsrichtlinie (5) gespeichert ist, wobei die Wartungsrichtlinie (5) entweder die Übertragung von Wartungsinformationen, die mit der Wartung des multifunktionalen Peripheriegeräts (2) in Beziehung stehen, oder eine Wartungsoperation des multifunktionalen Peripheriegeräts (2), die von der Wartungszentrale (3) gefordert wird, zu spezifizieren; und
eine Wartungsinformations-Sendeeinheit, um die Wartungsinformationen unter Bezugnahme auf die Wartungsrichtlinien-Datenbank zu der Wartungszentrale (3) zu senden,
wobei die Wartungszentrale (3) umfasst:
eine Wartungsinformations-Empfangseinheit, um die Wartungsinformationen von dem multifunktionalen Peripheriegerät (2) zu empfangen; und
eine Wartungsoperations-Befehlseinheit, um einen Wartungsoperationsbefehl auf der Grundlage der empfangenen Wartungsinformationen zu dem multifunktionalen Peripheriegerät (2) zu senden, und
wobei das multifunktionale Peripheriegerät (2) ferner umfasst:
eine Wartungsoperationsbefehl-Empfangseinheit, um den Wartungsoperationsbefehl von der Wartungszentrale (3) zu empfangen; und
eine Wartungsoperations-Steuereinheit, um den empfangenen Wartungsoperationsbefehl unter Bezugnahme auf die Wartungsrichtlinien-Datenbank auszuführen,
**dadurch gekennzeichnet,**
**dass** die Wartungsrichtlinien-Datenbank (29) mit dem multifunktionalen Peripheriegerät (2) direkt verbunden ist, während die Wartungsrichtlinien-Datenbank (29) mit dem multifunktionalen Peripheriegerät (2) nicht über das Internet (1) verbunden ist,
**dass** die in der Wartungsrichtlinien-Datenbank (29) gespeicherte Wartungsrichtlinie dazu ausgelegt ist, zu spezifizieren, ob die Wartungsoperation des multifunktionalen Peripheriegeräts (2) durch die Wartungszentrale (3) erlaubt ist, und
**dass** das multifunktionale Peripheriegerät (2) ferner eine Administratorauthentifizierungs-Verarbeitungseinheit, die dazu ausgelegt ist, einen Administrator zu authentifizieren, der das multifunktionale Peripheriegerät managt; und eine Wartungsrichtlinien-Erneuerungseinheit, die dazu ausgelegt ist, die Wartungsrichtlinien-Datenbank durch eine neue Wartungsrichtlinie zu ersetzen, die von dem Administrator eingegeben wird, der durch die Administratorauthentifizierungs-Verarbeitungseinheit authentifiziert worden ist, umfasst.

## Revendications

1. Périphérique multifonction (2) qui est connecté à un centre de maintenance (3) par l'intermédiaire d'Internet (1), comprenant :
une base de données de politique de maintenance dans laquelle une politique de maintenance est stockée, la politique de maintenance (5) adaptée pour spécifier soit la transmission d'informations de maintenance liées à la maintenance du périphérique multifonction (2) soit une opération de maintenance du périphérique multifonction (2) demandée par le centre de maintenance (3) ;
une unité de transmission d'informations de maintenance adaptée pour transmettre les informations de maintenance au centre de maintenance (3) en se référant à la base de données de politique de maintenance ;
une unité de réception de commande d'opération de maintenance adaptée pour recevoir une commande d'opération de maintenance demandée par le centre de maintenance (3) ; et
une unité de contrôle d'opération de maintenance adaptée pour effectuer la commande d'opération de maintenance reçue par l'unité de réception de commande d'opération de maintenance, en se référant à la base de données de politique de maintenance (29) ;
**caractérisé en ce que**
la base de données de politique de maintenance (29) est connectée directement avec le périphérique multifonction (2), où la base de données de politique de maintenance (29) n'est pas connectée avec le périphérique multifonction (2) via Internet (1),
**en ce que** la politique de maintenance stockée dans la base de données de politique de maintenance (29) est adaptée pour spécifier si l'opération de maintenance du périphérique multifonction (2) est autorisée par le centre de maintenance (3), et
**en ce que** le périphérique multifonction (2) comprend en outre une unité de traitement d'authentification d'administrateur qui est adaptée pour authentifier un administrateur qui gère le périphérique multifonction ; et une unité de renouvellement de politique de maintenance adaptée pour mettre à jour la base de données de politique de maintenance avec une nouvelle politique de maintenance entrée par l'administrateur qui est authentifié par l'unité de traitement d'authentification d'administrateur.

2. Périphérique multifonction (2) selon la revendication 1, dans lequel la politique de maintenance (5) est prévue pour spécifier une information de maintenance périodique qui est contenue dans les informations de maintenance et transmise au centre de maintenance automatiquement, et un positionnement temporel auquel l'information de maintenance périodique est transmise au centre de maintenance (3).

3. Périphérique multifonction (2) selon la revendication 2, comprenant en outre une unité de collecte d'informations de maintenance adaptée pour collecter les informations de maintenance périodique, et l'unité de transmission d'informations de maintenance adaptée pour transmettre les informations de maintenance périodique, collectées par l'unité de collecte d'informations de maintenance, au centre de maintenance (3) au positionnement temporel spécifié par la politique de maintenance (5).

4. Périphérique multifonction (2) selon la revendication 1, comprenant en outre une unité de demande d'opération adaptée pour transmettre une demande concernant la commande d'opération de maintenance au centre de maintenance (3), où l'unité de réception de commande d'opération de maintenance est adaptée pour recevoir la commande d'opération de maintenance qui est transmise par le centre de maintenance (3) en réponse soit à la demande transmise depuis l'unité de demande d'opération soit à une information de maintenance périodique transmise depuis l'unité de transmission d'informations de maintenance.

5. Périphérique multifonction (2) selon la revendication 1, comprenant en outre une unité d'authentification de centre de maintenance adaptée pour authentifier le centre de maintenance (3) lorsque l'unité de réception de commande d'opération de maintenance reçoit la commande d'opération de maintenance en provenance du centre de maintenance (3) ou lorsque l'unité de transmission d'informations de maintenance transmet une information de maintenance périodique au centre de maintenance (3).

6. Périphérique multifonction (2) selon la revendication 1, dans lequel les informations de maintenance transmises par l'unité de transmission d'informations de maintenance sont chiffrées.

7. Périphérique multifonction (2) selon l'une quelconque des revendications 1 à 6, dans lequel l'unité de renouvellement de politique de maintenance est prévue pour convertir la politique de maintenance (5) entrée par l'administrateur, en une donnée XML de sorte que la base de données de politique de maintenance soit mise à jour.

8. Périphérique multifonction (2) selon l'une quelconque des revendications 1 à 6, dans lequel l'unité de renouvellement de politique de maintenance est prévue pour mettre à jour la base de données de politique de maintenance en utilisant un support d'enregistrement sur lequel une politique de maintenance (5) décrite en XML est enregistrée.

9. Périphérique multifonction (2) selon l'une quelconque des revendications 1 à 6, dans lequel l'unité de renouvellement de politique de maintenance est prévue pour mettre à jour la base de données de politique de maintenance avec une politique de maintenance (5) entrée depuis un terminal connecté au réseau.

10. Procédé de maintenance d'un périphérique multifonction (2) qui est connecté à un centre de maintenance (3) par l'intermédiaire d'Internet (1) et équipé d'une base de données de politique de maintenance, où la base de données de politique de maintenance stocke une politique de maintenance (5) spécifiant soit la transmission d'informations de maintenance liées à la maintenance du périphérique multifonction (2) soit une opération de maintenance du périphérique multifonction (2) demandée par le centre de maintenance (3), le procédé comprenant les étapes consistant à :
transmettre les informations de maintenance au centre de maintenance (3) en se référant à la base de données de politique de maintenance ;
recevoir une commande d'opération de maintenance demandée par le centre de maintenance ; et
effectuer la commande d'opération de maintenance reçue en se référant à la base de données de politique de maintenance (29) ;
**caractérisé en ce que**
la base de données de politique de maintenance (29) est connectée directement avec le périphérique multifonction, où la base de données de politique de maintenance (29) n'est pas connectée avec le périphérique multifonction (2) via Internet (1),
**en ce que** la politique de maintenance stockée dans la base de données de politique de maintenance (29) est adaptée pour spécifier si l'opération de maintenance du périphérique multifonction (2) est autorisée par le centre de maintenance (3) et **en ce que** le procédé comprend en outre les étapes consistant à :
authentifier un administrateur qui gère le périphérique multifonction (2) ; et
mettre à jour la base de données de politique de maintenance avec une nouvelle politique de maintenance (5) entrée par l'administrateur qui est authentifié à l'étape d'authentification.

11. Procédé selon la revendication 10, dans lequel la politique de maintenance (5) est prévue pour spécifier une information de maintenance périodique qui est contenue dans les informations de maintenance et transmise au centre de maintenance (3) automatiquement, et un positionnement temporel auquel l'information de maintenance périodique est transmise au centre de maintenance (3).

12. Procédé selon la revendication 11, comprenant en outre l'étape consistant à collecter les informations de maintenance périodique, où les informations de maintenance périodique collectées sont transmises au centre de maintenance (3) au positionnement temporel spécifié par la politique de maintenance (5).

13. Procédé selon la revendication 10, comprenant en outre l'étape consistant à transmettre une demande concernant la commande d'opération de maintenance au centre de maintenance (3) depuis le périphérique multifonction (2), où la commande d'opération de maintenance qui est transmise par le centre de maintenance (3) en réponse soit à la demande transmise depuis le périphérique multifonction (2) soit à une information de maintenance périodique transmise depuis le périphérique multifonction (2) est reçue à l'étape de réception.

14. Procédé selon la revendication 10, comprenant en outre l'étape consistant à authentifier le centre de maintenance (3) lorsque la commande d'opération de maintenance est reçue en provenance du centre de maintenance (3).

15. Procédé selon la revendication 10, comprenant en outre l'étape consistant à authentifier le centre de maintenance (3) lorsqu'une information de maintenance périodique est transmise au centre de maintenance (3) depuis le périphérique multifonction (2).

16. Procédé selon la revendication 10, comprenant en outre l'étape consistant à chiffrer les informations de maintenance transmises à l'étape de transmission.

17. Procédé selon l'une quelconque des revendications 10 à 16, dans lequel, à l'étape de mise à jour, la politique de maintenance (5) entrée par l'administrateur est convertie en une donnée XML, de sorte que la base de données de politique de maintenance soit mise à jour.

18. Procédé selon l'une quelconque des revendications 1 à 16, dans lequel l'étape de mise à jour est prévue pour mettre à jour la base de données de politique de maintenance en utilisant un support d'enregistrement sur lequel une politique de maintenance (5) décrite en XML est enregistrée.

19. Procédé selon l'une quelconque des revendications 10 à 16, dans lequel l'étape de mise à jour est prévue pour mettre à jour la base de données de politique de maintenance avec une politique de maintenance (5) entrée depuis un terminal connecté au réseau (1).

20. Produit de programme informatique comprenant un code de programme informatique adapté pour amener un ordinateur à exécuter le procédé selon l'une quelconque des revendications 10 à 19.

21. Support d'enregistrement lisible par ordinateur comprenant un code de programme informatique adapté pour amener un ordinateur à exécuter le procédé selon l'une quelconque des revendications 10 à 19.

22. Système de maintenance qui inclut un centre de maintenance (3) et un périphérique multifonction (2) connecté au centre de maintenance (3) par l'intermédiaire d'un réseau (1), le centre de maintenance (3) effectuant une opération de maintenance du périphérique multifonction (2), le périphérique multifonction (2) comprenant :
une base de données de politique de maintenance dans laquelle une politique de maintenance (5) est stockée, la politique de maintenance (5) spécifiant soit la transmission d'informations de maintenance liées à la maintenance du périphérique multifonction (2) soit une opération de maintenance du périphérique multifonction (2) demandée par le centre de maintenance (3) ; et
une unité de transmission d'informations de maintenance transmettant les informations de maintenance au centre de maintenance (3) en se référant à la base de données de politique de maintenance,
le centre de maintenance (3) comprenant :
une unité de réception d'informations de maintenance recevant les informations de maintenance en provenance du périphérique multifonction (2) ; et
une unité de commande d'opération de maintenance transmettant une commande d'opération de maintenance au périphérique multifonction (2) sur la base des informations de maintenance reçues, et
le périphérique multifonction (2) comprenant en outre :
une unité de réception de commande d'opération de maintenance recevant la commande d'opération de maintenance en provenance du centre de maintenance (3) ; et
une unité de contrôle d'opération de maintenance effectuant la commande d'opération de maintenance reçue en se référant à la base de données de politique de maintenance,
**caractérisé en ce que**
la base de données de politique de maintenance (29) est connectée directement avec le périphérique multifonction (2), où la base de données de politique de maintenance (29) n'est pas connectée avec le périphérique multifonction (2) via Internet (1),
**en ce que** la politique de maintenance stockée dans la base de données de politique de maintenance (29) est adaptée pour spécifier si l'opération de maintenance du périphérique multifonction (2) est autorisée par le centre de maintenance (3), et
**en ce que** le périphérique multifonction (2) comprend en outre une unité de traitement d'authentification d'administrateur qui est adaptée pour authentifier un administrateur qui gère le périphérique multifonction ; et une unité de renouvellement de politique de maintenance adaptée pour mettre à jour la base de données de politique de maintenance avec une nouvelle politique de maintenance entrée par l'administrateur qui est authentifié par l'unité de traitement d'authentification d'administrateur.
